(19) Europäisches Patentamt
European Patent Office
Office européen des brevets

(11) EP 2 936 436 B1

(12) **EUROPÄISCHE PATENTSCHRIFT**

(45) Veröffentlichungstag und Bekanntmachung des Hinweises auf die Patenterteilung:
**16.11.2016 Patentblatt 2016/46**

(21) Anmeldenummer: **13834371.0**

(22) Anmeldetag: **20.12.2013**

(51) Int Cl.:
*G06K 9/34* (2006.01)  *G06K 9/62* (2006.01)
*G06T 7/00* (2006.01)  *G06F 3/0488* (2013.01)

(86) Internationale Anmeldenummer:
**PCT/DE2013/000815**

(87) Internationale Veröffentlichungsnummer:
**WO 2014/094723 (26.06.2014 Gazette 2014/26)**

(54) **COMPUTER-IMPLEMENTIERTES VERFAHREN UND SYSTEM ZUR ERKENNUNG EINES MITTELS STROKE-EINGABE EINES ANWENDERS MARKIERTEN OBJEKTS ANHAND VON PIXELN IN EINEM DIGITALEN BILD**

COMPUTER IMPLEMENTED METHOD AND SYSTEM FOR DETECTING AN OBJECT MARKED BY MEANS OF STROKE INPUT OF A USER ON THE BASIS OF PIXELS IN A DIGITAL IMAGE

PROCÉDÉ MIS EN OELIGUVRE PAR ORDINATEUR ET SYSTÈME POUR LA RECONNAISSANCE D'UN OBJET MARQUÉ AU MOYEN D'UNE ENTRÉE DE FRAPPE D'UN UTILISATEUR AU MOYEN DE PIXELS DANS UNE IMAGE NUMÉRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2012 DE 102012025337**
**15.03.2013 US 201313834530**

(43) Veröffentlichungstag der Anmeldung:
**28.10.2015 Patentblatt 2015/44**

(73) Patentinhaber: **menschmaschine Publishing GmbH**
**12053 Berlin (DE)**

(72) Erfinder:
• **WACHSMUTH, Friedemann**
**22335 Hamburg (DE)**
• **CASE, Richard**
**20359 Hamburg (DE)**

(74) Vertreter: **Springorum, Harald**
**Kiani & Springorum,**
**Patent- und Rechtsanwälte**
**Taubenstrasse 4**
**40479 Düsseldorf (DE)**

(56) Entgegenhaltungen:
• **BOYKOV Y Y ET AL: "Interactive graph cuts for optimal boundary & region segmentation of objects in N-D images", PROCEEDINGS OF THE EIGHT IEEE INTERNATIONAL CONFERENCE ON COMPUTER VISION. (ICCV). VANCOUVER, BRITISH COLUMBIA, CANADA, JULY 7 - 14, 2001; [INTERNATIONAL CONFERENCE ON COMPUTER VISION], LOS ALAMITOS, CA : IEEE COMP. SOC, US, Bd. 1, 7. Juli 2001 (2001-07-07), Seiten 105-112, XP010553969, ISBN: 978-0-7695-1143-6**
• **MORTENSEN E N ET AL: "INTELLIGENT SCISSORS FOR IMAGE COMPOSITION", COMPUTER GRAPHICS PROCEEDINGS. LOS ANGELES, AUG. 6 - 11, 1995; [COMPUTER GRAPHICS PROCEEDINGS (SIGGRAPH)], NEW YORK, IEEE, US, 6. August 1995 (1995-08-06), Seiten 191-198, XP000546228, ISBN: 978-0-89791-701-8**
• **Dan R. Olsen ET AL: "Edge-respecting brushes", Proceedings of the 21st annual ACM symposium on User interface software and technology, UIST '08, 19 October 2008 (2008-10-19), pages 171-180, XP055155569, New York, New York, USA DOI: 10.1145/1449715.1449742 ISBN: 978-1-59-593975-3**

EP 2 936 436 B1

**Beschreibung**

Die vorliegende Erfindung betrifft ein computer-implementiertes Verfahren und System zur Erkennung eines mittels Stroke-Eingabe eines Anwenders markierten Objekts anhand von Pixeln in einem digitalen Bild.

Die Nachbearbeitung digitaler Bilddaten, vorzugsweise digitaler Fotos ist heute ein Prozess, der fest zum fotografischen Arbeitsablauf gehört. Zum einen optimieren moderne Kameras die zu speichernden Fotos automatisch mit komplexen Algorithmen, um optische Fehler wie chromatische Aberration oder Verzeichnungen auszugleichen. Zum anderen werden digitale Fotos aber auch individuell vom Fotografen bearbeitet.

Diese individuelle Bearbeitung findet in zunehmendem Maße direkt auf dem aufnehmenden Gerät statt, da der allgemein bekannte Arbeitsablauf, bei dem Bilder von der Kamera auf einen Computer überspielt werden, um dort selektiert, nachbearbeitet und ggf. exportiert zu werden, oft als zeitraubend und umständlich empfunden wird.

Zudem wird heute ein rasant wachsender Teil an Fotos mit Kamera-Smartphones aufgenommen, deren optische Abbildungsleistung und Rechenkapazität sich den klassischen Kompakt-Kameras immer mehr annähert bzw. diese bereits übersteigt. Die bekannte Funktionalität entsprechender Kamerasoftware beinhaltet gängige Bearbeitungs- und Korrekturfunktionen wie globale Einstellungen zu Helligkeit, Kontrast, Farbsättigung oder Weissbalance (Lichttemperatur). Ebenfalls zur Bearbeitung eines ganzen Fotos gängig sind Einstellungsfunktionen zur Mikrokontrastanhebung, Nachschärfung, Weichzeichnung oder Simulation der Verlagerung der Schärfebene nach Scheimpflugschem Gesetz (sogenannter "Tilt-Shift Effekt"). Desweiteren erfahren komplexe "Filter" eine zunehmende Beliebtheit, die bei sehr einfacher Bedienbarkeit durch komplexe, automatisch kaskadierte Bearbeitungsschritte das Foto aufwendig nachbearbeiten (Beispiele: Sepia-Umsetzung, Nostalgiefilter, Simulation spezifischer Eigenschaften chemischen Filmes oder Simulation spezieller chemischer Entwicklungsprozesse.)

Eine Einschränkung solcher Bearbeitungs- und Korrekturfunktionen in allgemein bekannter Kamerasoftware ist nun aber, dass sie jeweils auf das gesamte Bild angewendet werden. Grundsätzlich ist die selektive Anwendung von Effekten und Bildberechnungen aber eine häufige Anforderung bei der Nachbearbeitung digitaler Bilder, um nur bestimmte Bereiche des Bildes bzw. des Motives zu verändern. Gängige Werkzeuge zur Bereichsauswahl, wie sie aus klassischen Bildbearbeitungsprogrammen stationärer Computer oder Laptops bekannt sind, sind aber insofern oft unbefriedigend, als dass sie umständlich und zeitaufwändig zu bedienen sind, um eine ausreichend präzise Auswahl zu definieren. Auch benötigen gängige Bereichsauswahlwerkzeuge eine große Menge an präzisen Informationen durch den Anwender, die einerseits präzise Eingabegeräte wie Computer-Maus und Grafiktablett, andererseits Kontrollhilfen wie großformatige Bildschirme und hohe Zoom-Stufen erfordern. Ein grundsätzliches Problem gegenüber der Bearbeitung am PC ist somit die Tatsache, dass Smartphones und Kameras mit Smartphone-Funktionalität und Formfaktor die gängigen Eingabegeräte wie Maus oder Grafiktablett fehlen und die Größe des Bildschirms ausgesprochen begrenzt ist. Es ist dadurch bisher nur sehr eingeschränkt möglich, ein Bild mit ausreichender Präzision selektiv zu bearbeiten. Neben den physikalischen Limitierungen der Geräte ist der Prozess der Auswahl eines zu bearbeitenden Bereiches aber auch grundsätzlich ein zeitraubendes, komplexes Unterfangen, das auch vom Profi am entsprechend ausgestatteten PC meist nur in vielen einzelnen Schritten und mit hohem Rechenaufwand zu bewerkstelligen ist.

So ist auch das selektive Bearbeiten einzelner Bild- oder Motivbereiche direkt auf Smartphones oder Kameras mit Smartphone-Funktionalität mit bekannten technischen Lösungen nicht zufriedenstellend möglich, da

- dem Anwender durch die in der Regel ausschließliche Verfügbarkeit eines berührungsempfindlichen Displays (eines sogenennten Touchscreens) als Eingabegerät kein der Notwendigkeit der Bereichsmarkierung entsprechend präzises Instrument zur Verfügung steht,

- die für bekannte Algorithmen zur Bereichs- und Auswahloptimierung notwendige Rechenleistung in Smartphones und Kameras mit Smartphone-Funktionalität nicht oder nur eingeschränkt vorhanden ist,

- die Definition eines bestimmten Motivbereiches zur selektiven Bearbeitung somit ein so sehr zeitraubender Prozess ist, daß er der Verwendung der Smartphone-Kamera bzw. der der Kamera mit Smartphone-Funktionalität zur spontanen, unbeschwerten Fotografie ("Schnappschuss-Fotografie" in der Regel entgegensteht.

Angesichts dessen stellt sich daher das Problem, eine effektivere, d.h. schnellere Erkennung von Objekten in digitalen Bildern bei guter Objekterkennungsqualität zu erreichen, als dies nach dem Stand der Technik derzeit möglich ist und so diese Funktionalität insbesondere auch auf mobilen Geräten, wie Smartphonekameras zur Verfügung stellen zu können. Darüber hinaus ist eine solche effektivere Objekterkennung unter dem Gesichtspunkt der Leistungssteigerung natürlich auch für den Einsatz auf herkömmlichen Computer zur Bildverarbeitung anstrebenswert, da auch deren Effektivität hierdurch erheblich gesteigert werden kann, wenn der einzelne Objekterkennungsprozeß bei guter Qualität deutlich rascher abläuft.

Dieses Problem wird durch das Verfahren nach Anspruch 1 und das System nach Anspruch 15 gelöst.

Zweckmäßige Ausführungsformen ergeben sich aus den Unteransprüchen.

Die vorliegende Erfindung arbeitet - am Beispiel eines Smartphones mit berührungssensitivem Display (sogenannter Touchscreen) erläutert - dabei vorzugsweise wie folgt (wobei das hier anhand eines Smartphones Erläuterte ohne weiteres auch auf einen anderen Computer - etwa einen konventionellen Desktop-Computer oder auch Laptop-Computer - mit etwa anderen Eingabeschnittstellen wie etwa einer Maus oder einem Trackball oder dergleichen übertragbar ist, wobei ein *Stroke* dann nicht mehr mit einem Fingerstreich, sondern etwa mittels einer Mausbewegung und Auslösung der Maus, zu bewerkstelligen ist):

Der Anwender kann nach der vorliegenden Erfindung zunächst grob den gewünschten Motivbereich bzw. das gewünschte Objekt nachzeichnen, was etwa auf einem Mobilgerät mit berührungsempfindlichen Display meist schon mit einem einzigen Fingerstreich ("Stroke zu bewerkstelligen ist. Grundsätzlich kann ein Stroke aber auch vermittels eines anderen Eingabegerätes, wie etwa einer Maus oder einem Trackball oder ähnlichem ausgeführt werden. Desweiteren kann der Anwender seine Bereichsauswahl bei Bedarf mit weiteren einfachen Strokes konkretisieren, falls es durch komplexe Objektformen oder ungenaue Strokes zu Fehlerkennungen gekommen ist. Die Erfindung arbeitet ausgesprochen schnell und ermöglicht dem Anwender so eine interaktive Benutzung, die binnen kürzester Zeit zum Ziel führt.

Zum Markieren des gewünschten Objektes bzw. Bildbereiches steht dem Anwender somit über die jeweilige Eingabeschnittstelle des verwendeten Computers ein Malwerkzeug zur Verfügung. Ein Stroke mit diesem Werkzeug über das dargestellte digitale Bild - etwa das dargestellte Photo - stellt dabei vorzugsweise die so vormarkierten Bereiche durch eine farbliche Hervorhebung - etwa eine transparente oder semitransparente - Hintergrundfarbmarkierung dar. Der Wirkradius (Perimeterbereich) des zur Markierung verwendeten Werkzeugs ('*Pinselgröße*') ist im Durchmesser vorzugsweise etwas größer als die Spitze eines Zeigefingers vorgesehen, so daß der Anwender sofort erkennen kann, wo (und das) er einen Bereich (Perimeterbereich) im Bild markiert. Sobald der Anwender den Finger vom Touchscreen hebt (Ende der Stroke-Geste), wird der vormarkierte Bereich vorzugsweise als Input nach dem erfindungsgemäßen Verfahren zur Objekterkennung in digitalen Bildern verarbeitet, das entsprechend markierte Objekt mit seinen Pixeln im Bild erkannt und vorzugsweise auch - etwa wiederum durch eine transparente oder semi-transparente farbige Hinterlegung - visuell dargestellt. Hierbei wird die farbliche Hervorhebung des vorausgewählten Bereiches vorzugsweise durch eine anders gefärbte Hervorhebung ersetzt, die die das erkannte Objekt repräsentiert.

Erkennt der Anwender im Ergebnis nun unzureichende Ergebnisse der automatischen Bereichsmarkierungen, kann er die bereits berechnete Bereichsmarkierung durch zusätzliche Stroke-Gesten - sei es mittels eines berührungssensitiven Displays, sei es vermittels einer konventionellen Eingabeschnittstelle, wie etwa einer Maus - iterativ konkretisieren und korrigieren. Die Erfindung sieht hier vorzugsweise ein weiteres Bearbeitungswerkzeug vor, dass die umgekehrte Wirkung des zuvor beschriebenen Malwerkzeuges hat, nämlich ein sogenanntes '*Löschwerkzeug*'. Der Anwender kann vorzugsweise auch mit Hilfe dieses Werkzeugs seine Bereichsauswahl iterativ konkretisieren und korrigieren, wobei die mit diesem Werkzeug jeweils getätigten Strokes zu einer entsprechenden Verkleinerung der Bereichsmarkierung führen.

Da die Auflösung des zu bearbeitenden Bildes die Auflösung des Displays eines Kamera-Smartphones bzw. einer Kamera mit Smartphone-Funktionalität in der Regel deutlich überschreitet, könnten feine Objektdetails in der Gesamtdarstellung des zu bearbeitenden Bildes für den Anwender nicht sichtbar sein. Auch ist es möglich, dass eine komplexe, fein aufgelöste Objektstruktur einen entsprechend präzise platzierten Stroke erfordert. Die Erfindung erlaubt es dem Anwender vorzugsweise nun, jederzeit mit der bekannten sogenannten '*Pinch-Geste*' (Bewegung zweier Fingerspitzen auf dem Touchscreen voneinander weg bzw. aufeinander zu) beliebig in entsprechende Motivdetails herein zu zoomen. Dies kann jedoch ebenso vermittels konventioneller Eingabeschnittstellen (Eingabegeräte), wie etwa einer Maus mit Rändelrad zum Zoomen oder auch einem Touchpad oder auch der Tastatur geschehen. Analog kann der Anwender den derzeitig sichtbaren Bildausschnitt nach Bedarf verschieben. Die Erfindung sieht hier vorzugsweise eine sogenannte '*Panning-Geste*' (Verschieben zweier in weitgehend gleichbleibendem Abstand liegender Fingerspitzen auf dem Touchscreen) sowie ein dediziertes sogenanntes *Panning-Werkzeug* (auch '*Hand-Tool*' genannt) vor. Auch die Kombination von *Pinch-* und *Panning-Geste* ist vorzugsweise fließend möglich und erlaubt eine schnelle, intuitive Auswahl der nachzubearbeitenden Bereichsauswahl.

Ein *Stroke* bezeichnet - wie bereits vorstehend erwähnt und unbeschadet der allgemeineren Bedeutung des Begriffs, die sich etwa bei Verwendung anderer Eingabegeräte (wie etwa einer Maus) ergibt - eine zweidimensionale Form, die etwa durch eine abgeschlossene Malgeste des Anwenders auf dem berührungssensitiven Display definiert wird. Anhand der erkannten Koordinaten des der Malgeste zugrundeliegenden Fingerstreichs werden die Pixel im digitalen Bild bestimmt, die mit der Stroke-Eingabe des Anwenders korrespondieren, was einem relativ 'dünnen' Linienzug - wie etwa von der hierzu verwendbaren Fingerspitze (oder auch einem spitzer [stiftartig] zulaufenden etwaigen Berührungswerkzeug für das berührungssensitive Display) hervorgerufen - entspricht. Sodann werden die Pixel im Bild bestimmt, die in einem wählbaren Perimeterbereich - vorzugsweise einem wählbaren Radius - um den Bereich der Pixel, die mit der Stroke-Eingabe des Anwenders korrespondieren, herum liegen, was vorzugsweise unter Berücksichtigung des jeweiligen Darstellungsmaßstabes geschieht.

Vorzugsweise beginnt, sobald der Anwender die Malgeste beendet, etwa indem er den malenden Finger vom berührungssensitiven Display abhebt, der Objekterkennungsprozeß. Alternativ kann dieser Objekterkennungsprozeß - etwa bei Verwendung eines enstprechend leistungsfähigen Computers - vorzugsweise auch schon parallel zur Ausführung des *Strokes,* etwa vermittels der vorerwähnten *Malgeste,* beginnen (sogenannter Online-Objekterkennungsprozess). Verwendet man jedoch einen Offline-Objeterkennungsprozess - etwa weil der zur Ausführung des Objekterkennungsverfahrens verwendete Computers für eine zum *Stroke* parallele Objekterkennung nicht leistungsfähig genug ist -, so ist der verwendete Computer vorzugsweise während der nun erfolgenden Schritte des Verfahrens zur Objekterkennung für eine gewisse Zeit (nach dem derzeitigen Stand der Technik zum Zeitpunkt der vorliegenden Anmeldung für einige Sekundenbruchteile) für weitere Eingaben durch den Anwender gesperrt.

Auch ist in diesem Zusammenhang zu erwähnen, daß die nach der vorliegenden Erfindung zu bearbeitenden Speicherbereiche (Puffer) zur Aufnahme der digitalen Bilder eine sehr große Menge an Pixeln beinhalten können. Da sich die zur Objekterkennung benötigte Rechenzeit mit der Anzahl dieser Pixel mit erhöht, kann es vorteilhaft sein, die entsprechenden Bereiche des Speichers, die der Aufnahme der digitalen Bilddaten dienen, mit Hilfe eines Skalierungsfaktors $s$ (mit $s \leq 1$) so zu skalieren, dass sie maximal $w$ Pixel enthalten. Wenn die Speicherbereiche jeweils weniger als $w$ Pixel enthalten wird $s = 1$ gewählt. Die Umsetzung der Erfindung erlaubt eine freie Wahl von $w$, so daß abhängig von der verfügbaren Rechenleistung $w$ derart gewählt werden kann, daß eine akzeptable Bearbeitungsdauer zur Objekterkennung erreicht wird.

Die eigentliche Objekterkennung nach der vorliegenden Erfindung geschieht unter der Verwendung der Pixel im digitalen Bild, die mit der Stroke-Eingabe des Anwenders korrespondieren und der Pixel des digitalen Bildes, die im Perimeterbereich liegen, also vermittels der Pixel des digitalen Bildes, wie sie nach Abschluß etwa der Malgeste - wie oben beschrieben - bestimmt wurden.

Das Grundprinzip der von der vorliegenden Erfindung genutzten Objekterkennung hierbei lautet, daß für jedes Pixel innerhalb des Perimeterbereichs bestimmt wird, ob es hinsichtlich einer gewählten Metrik näher am Außenrand des Perimeterbereiches oder näher an den Pixeln liegt, die mit der Stroke-Eingabe des Anwenders korrespondieren.

Liegt nun ein Pixel innerhalb des Perimeterbereiches hinsichtlich der gewählten Metrik näher an den Pixeln, die mit der Stroke-Eingabe des Anwenders korrespondieren (also etwa der '*dünnen*' Linie, die durch die Berührung der Fingerspitze mit dem berührungssensitiven Displays beim *Stroke* hervorgerufen wird), als am Außenrand des Perimeterbereiches, so wird dieses Pixel als zu dem zu erkennenden Objekt zugehörig bestimmt.

Liegt ein Pixel innerhalb des Perimeterbereiches aber es hinsichtlich der gewählten Metrik näher am Außenrand des Perimeterberiches, als an den Pixeln, die mit der Stroke-Eingabe des Anwenders korrespondieren, so wird dieses Pixel als <u>nicht</u> zu dem zu erkennenden Objekt zugehörig bestimmt.

Führt man nun die vorstehende Objekterkennung für alle Pixel im Perimeterbereich auf einem Computer - hier vorzugsweise einem Smartphone - aus und ordnet obendrein die Pixel, die mit der Stroke-Eingabe des Anwenders korrespondieren, ebenfalls dem zu erkennenden Objekt zu, so werden alle Pixel des mittels Stroke-Eingabe des Anwenders markierten Objekts eines in einem Bereich eines Speichers eines Computers hinterlegten digitalen Bildes erkannt, womit das entsprechend erkannte Objekt auch im Speicher markiert und vorzugsweise selektiv - und damit unabhängig von den Pixeln des digitalen Bildes, die nicht zu dem Objekt gehören - digital weiterverarbeitet werden kann. Dies ist von großem Vorteil, da sich auf diese Weise eine objektselektive weitere Bildverarbeitung an die Objekterkennung anschließen kann, womit etwa die Freistellung eines in einem komplexen Bildzusammenhang befindlichen Objekts, etwa einer Person auf einem Foto, erfolgen kann.

Die Bestimmung dessen, ob ein Pixel aus dem Perimeterbereich hinsichtlich einer gewählten Metrik näher am Außenrand des Perimeterbereiches oder näher an den Pixeln liegt, die mit der Stroke-Eingabe des Anwenders korrespondieren, erfolgt mittels eines Algorithmus zur Bestimmung der kürzesten Wege hinsichtlich der gewählten Metrik in einem kantengewichteten Graphen, wobei die Pixel im Perimeterbereich einschließlich der Pixel am Außenrand des Perimeterberiches und die Pixel, die mit der Stroke-Eingabe des Anwenders korrespondieren die Knoten des Graphen bilden und die Gewichte der, die Knoten verbindenden Kanten des Graphen einen Abstand zwischen den entsprechenden Pixeln hinsichtlich der gewählten Metrik repräsentieren.

Vorzugsweise wird dabei als Algorithmus zur Bestimmung der kürzesten Wege hinsichtlich der gewählten Metrik in dem Graphen der bekannte Algorithmus von Dijkstra verwendet, der einen kürzesten Weg zwischen einem gegebenen Startknoten und einem der oder auch allen übrigen Knoten in dem kantengewichteten Graph ermitteln kann. Alternativ können natürlich auch andere Algorithmen zur Ermittlung kürzester Wege in kantengewichteten Graphen benutzt werden, etwa die Algorithmen von Bellman-Ford, Moore, Floyd etc..

Bei der Verwendung des Algorithmus von Dijkstra (oder auch einer Alternative hierzu) zur Bestimmung der kürzesten Wege erfolgt vorzugsweise eine Bestimmung der Länge des kürzesten Weges zwischen einem Pixel, der mit der Stroke-Eingabe des Anwenders korrespondiert oder einem Pixel am Außenrand des Perimeterbereichs als Startknoten und allen Knoten des Perimeterbereichs.

Besonders bevorzugterweise wird während der Ausführung des Dijkstra-Algorithmus als nächster Knoten, der auf dem jeweilig zu findenden kürzesten Weg liegt, der Knoten gewählt wird, dessen Abstandssumme hinsichtlich der gewählten Metrik auf dem zu diesem Knoten zugehörigen und bis dahin gefundenen kürzesten Weg über alle zwischenliegenden Knoten im Graphen hin zu diesem Knoten vom gewählten Startpunkt aus die kleinste ist. Dabei kann der als nächster auf dem jeweilig zu findenden kürzesten Weg gewählte Knoten vermittels eines hierzu verwendeten Fibonacci-Heaps bestimmt werden, dessen Schlüssel die Abstandssumme hinsichtlich der gewählten Metrik, der auf dem jeweiligen Knoten zugehörigen kürzesten Weg über alle zwischenliegenden Knoten im Graphen hin zu diesem Knoten vom gewählten Startpunkt aus ist. Der Einsatz eines Fibonacci-Heaps macht dabei insbesondere die Verwendung des vorgenannten Dijkstra-Algorithmus noch effizienter.

Der Artikel von Dan R. Olsen et al: "Edge-respecting brushes", Proc. 21st ACM symposium on User interface software and technology (UIST), 19. Oktober 2008, zeigt ein Verfahren in dem für jeden Punkt eines - hinsichtlich seiner Zugehörigkeit zum zu erkennenden Objekt noch unsicheren - Bereiches festgestellt wird, ob dieser Punkt hinsichtlich einer gewählten Metrik, näher an einem sicher zum zu erkennenden Objekt gehörigen oder näher an den außerhalb vorgenannten Bereiches und bereits sicher nicht zum zu erkennenden Objekt zugehörigen Punkten liegt. Liegen die jeweiligen Punkte dann innerhalb des vorgenannten - hinsichtlich seiner Zugehörigkeit zum zu erkennenden Objekt noch unsicheren - Bereiches näher an dem sicher zum Objekt gehörigen Punkt, so werden sie dem Objekt zugeschlagen, anderenfalls nicht.

Bei dem Verfahren nach der vorliegenden Erfindung wird sowohl der Abstand hinsichtlich der gewählten Metrik zwischen jeweils zwei beliebigen Pixeln, die mit der Stroke-Eingabe des Anwenders korrespondieren wie auch der Abstand zwischen jeweils zwei beliebigen Pixeln am Außenrand des Perimeterbereiches hinsichtlich der gewählten Metrik zu Null gesetzt. Auf diese Weise werden aus der Sicht des kantengewichteten Graphen einerseits die Pixel, die mit der Stroke-Eingabe korrespondieren und so inmitten des zu erkennenden Objekts liegen als eine Art einziges Zentrum des zu erkennenden Objekts - gewissermaßen als ein sicher zum Objekt gehöriges Inneres des zu erkennenden Objekts - gewichtet und betrachtet und andererseits die Pixel am Außenrand des Perimeters ebenfalls als ein einziges gleichgewichtetes sicheres Äußeres gegenüber dem zu erkennenden Objekt angesehen.

Auch können Pixel, die entweder mit der Stroke-Eingabe des Anwenders korrespondieren oder am Außenrand des Perimeterbereichs liegen während der Ausführung des Dijkstra-Algorithmus auch wechselnd als jeweiliger Startknoten fungieren. Bei der Bestimmung des jeweiligen zu einem Knoten führenden kürzesten Weges wird dann festgehalten, ob dieser jeweilige kürzeste Weg von einem Pixel als Startknoten stammt, das mit der Stroke-Eingabe des Anwenders korrespondiert oder aber von einem Pixel als Startknoten stammt, das auf dem Außenrand des Perimeterbereichs liegt. Hierdurch ist es möglich die Bestimmung aller kürzeseten Wege für die Pixel im Perimeterbereich parallel im Hinblick auf den Abstand (hinsichtlich der gewählten Metrik) zum Außenrand des Perimeterbereichs und zu den Pixeln, die mit der Stroke-Eingabe des Anwenders korrespondieren im Inneren des Objekts durchzuführen. Hierbei wird dann jeder zu einem Pixel gehörige Knoten des Graphen dahingehend markiert, ob der zu ihm führende und ermittelte kürzeste Weg zum Außenrand des Perimeters führt oder zu den Pixeln, die mit der Stroke-Eingabe des Anwenders korrespondieren und daher im Inneren des Objektes als zu diesem in jedem Falle zugehörig liegen.

Um die Erkennungsgenauigkeit tatsächlicher Kanten gegenüber Bildstörungen wie Rauschen, Filmkorn oder auch sehr feiner Bilddetails zu erhöhen und Signale die nicht zur Erkennbarkeit des Objekts beitragen, zu reduzieren, ist zudem vorzugsweise die Verwendung eines bilateralen Filters vorgesehen. Dieser wird auf das digitale Bild angewendet, wobei die Größe des dabei jeweils verwendeten Filterkerns - vorzugsweise proportional zur Anzahl der Pixel des digitalen Bildes - gewählt wird. Die proportionale Wahl der Größe des Filterkerns bewirkt eine einheitliche und durchgängige Glättung unabhängig von den tatsächlichen Dimensionen des digitalen Bildes.

Als Metrik für den Abstand der Pixel kommt vorzugsweise die Distanz zwischen den Farben der beiden Pixel infrage, wobei vorteilhafterweise der Euklidische Abstand zwischen den beiden Farben der Pixel verwendet wird, indem die jeweiligen Farbkomponentenanteile - vorzugsweise etwa Rot-, Grün- und Blau-Komponentenanteile - als Koordinaten im dreidimensionalen Raum $R^3$ verwendet werden, wodurch sich eine geometrische (euklidische) Distanz zwischen den beiden - den jeweiligen Pixeln entsprechenden - Punkten im Raum $R^3$ ermitteln läßt. Jeder der beiden Punkte im dreidimensionalen Raum entspricht dabei der Farbe des ihm zugehörigen Pixels im digitalen Bild, die aus den, den drei Dimensionen des Raumes entsprechenden Farbkomponenten besteht und deren konkrete Anteile für das jeweilige Pixel den Ort des Punktes im Raum $R^3$ festlegen. Grundsätzlich sind aber auch andere Metriken verwendbar, vorzugsweise, wenn diese zur Abbildung von Ähnlichkeiten der Bildinformation geeignet sind.

Die vorliegende Erfindung zeigt ein neuartiges Verfahren zur automatischen Erkennung von Objekten in digitalen Bilddaten, das besonders schnell und ressourcensparend arbeitet, dabei aber keine Abstriche bezüglich Präzision oder möglicher Bildauflösung macht. Die letztendlich entstehende Bereichsdefinition zur Objektmarkierung hat somit die gleiche Auflösung wie das zur Bearbeitung vorgesehene Bild, so daß keine Interpolationsartefakte oder andere Ungenauigkeiten entstehen.

Eine Besonderheit der vorliegenden Erfindung ist die adaptive Präzision der Objekterkennung. Sie bewirkt, dass die Funktion unabhängig von der Größe des aktuell sichtbaren Bildausschnittes ('Zoomlevel') in immer gleicher, hoher Geschwindigkeit arbeitet. Eine Verkleinerung des sichtbaren Bildausschnittes (höherer Zoomlevel) erhöht dabei lediglich die Präzision der Erkennung komplexer Kanten, die ggf. unter Verwendung verschiedener Zoomlevel iterativ entstehende Bereichsauswahl hat grundsätzlich die dem Originalbild entsprechende Auflösung.

Ein Vorteil der adaptiven Erkennungspräzision ist es, daß das Signal-Rausch-Verhältnis immer optimiert ist. Sehr feine Bilddetails wie Sensorrauschen oder auch sehr fein gezeichnete Motivstrukturen werden in hohen Zoomstufen (wie zum Beispiel einer initialen Gesamtansicht des Bildes) nicht zur Berechnung der Bereichsmarkierung in Betracht gezogen. Sollte der Anwender aber die Erkennung solcher Details in bestimmten Motivbereichen wünschen (z.B. zur präzisen Erkennung von Haaren oder Haarsträhnen), wird die Erkennungsgenauigkeit vorzugsweise durch den entsprechend zur Bearbeitung gewählten Zoomlevel adaptiv präzisiert.

Die vorliegende Erfindung erlaubt es somit erstmals, direkt auf einem Kamera-Smartphone oder einer Kamera mit Smartphone-Funktionalität gezielt Objekte eines Motivs oder auch frei gewählte Motivbereiche binnen weniger Sekunden mit wenigen Schritten zu markieren und nachfolgend entsprechend selektiv zu bearbeiten, ohne Qualitätsverluste in Kauf nehmen zu müssen. Setzt man sie auf einem konventionellen Desktop-Computer oder einem Laptop oder Ähnlichem ein, so trägt sie etwa im Rahmen der Objekterkennung bei der Bildverarbeitung erheblich zur Leistungssteigerung bei, indem sie Dauer dieser Objekterkennung gegenüber den nach dem Stand der Technik bekannten Methoden massiv reduziert.

Ziel des erfindungsgemäßen Verfahrens zur Objekterkennung ist es, eine bestmögliche Objekterkennung bei möglichst hoher Geschwindigkeit zu gewährleisten. Bei einfachen Formen kann der Anwender so schon mit nur einem sogenannte 'Stroke' zum Ziel kommen. Sind aber komplexe Formen zu markieren (etwa Haare oder Gitterstrukturen), kann der Anwender beliebig in das Bild hinein-zoomen und die Genauigkeit der verwendeten Objekterkennung entsprechend (proportional) erhöhen.

Im Ergebnis dauert eine Berechnung so immer gleich lange (auf einem handelsüblichen Smartphone zum Zeitpunkt der hier vorliegenden Anmeldung nur Sekundenbruchteile). Die erreichte Genauigkeit definiert sich durch den jeweiligen Zoom-Level.

Führt man die Objekterkennung nach der vorliegenden Erfindung für alle Pixel im Perimeterbereich auf einem Computer - hier vorzugsweise einem Smartphone - aus und ordnet obendrein die Pixel, die mit der Stroke-Eingabe(n) des Anwenders korrespondieren, ebenfalls dem zu erkennenden Objekt zu, so werden alle Pixel des mittels Stroke-Eingabe(n) des Anwenders markierten Objekts eines in einem Bereich eines Speichers eines Computers hinterlegten digitalen Bildes erkannt, womit das entsprechend erkannte Objekt auch im Speicher markiert und vorzugsweise selektiv - und damit unabhängig von den Pixeln des digitalen Bildes, die nicht zu dem Objekt gehören - digital weiterverarbeitet werden kann. Dies ist von großem Vorteil, da sich auf diese Weise eine objektselektive weitere Bildverarbeitung an die Objekterkennung anschließen kann, womit etwa die Freistellung eines in einem komplexen Bildzusammenhang befindlichen Objekts, etwa einer Person auf einem Foto, erfolgen kann.

Im folgenden werden nicht einschränkend zu verstehende Ausführungsbeispiele anhand der Zeichnung besprochen. In dieser zeigen:

Fig. 1 als Diagramm exemplarisch verschiedene Geräte und ein sie verbindendes Netzwerk, wie vorliegend als Ausführungsform beschrieben sind,

Fig. 2 exemplarisch das funktionale Blockdiagramm eines Endgerätes sowie einige Datenstrukturen und Komponenten desselben,

Fig. 3 das funktionale Blockdiagramm des Datenspeichers eines Endgerätes, wie er in Fig. 2 referenziert wird,

Fig. 4 einen Prozess als Flussdiagramm, in dem ein Endgerät Fingerstreiche ("Strokes") eines Anwenders empfängt und verarbeitet, eine Objekterkennung ausführt, Filter- oder Effektfunktionen ausführt und schließlich das Ergebnis der gesamten Operation darstellt,

Fig. 5 ein Prozessdetail als Flussdiagramm zum Empfangen und Verarbeiten von Fingerstreichen des Anwenders ("Strokes"), im Folgenden Stroke-Eingabeprozess genannt,

Fig. 6 ein Prozessdetail als Flussdiagramm zur Ausführung der Objekterkennung, im folgenden auch als Objekterkennungsprozess bezeichnet,

Fig. 7 ein Beispiel eines Prozessdetails als Flussdiagramm zur Erzeugung eines (graphentheoretischen) Kosten-Netzwerks aus Pixeln, in dem ein Wegfindungs-Algorithmus zur Identifikation von Objektpixeln angewendet wird,

Fig. **8**    eine grafische Illustration des Inhaltes der Puffer W, I, P, B und D,

Fig. **9**    eine grafische Illustration des Inhaltes der Puffer W, P, B und D,

Fig. **10**    eine grafische Illustration des Inhaltes der Puffer R, D, B, P und W,

Fig. **11**    eine grafische Illustration des Inhaltes des Puffers R, die Anwendung eines Gauß-Filters auf denselben sowie die Anwendung einer Rampen-Schwellenwert-Funktion auf das Ergebnis,

Fig. **12**    einen Prozess als Flussdiagramm, in dem ein Endgerät zum einen Fingerstreiche ("Strokes") eines Anwenders empfängt und verarbeitet und zum anderen parallel eine Objekterkennung ausführt,

Fig. **13**    als Illustration exemplarisch die Benutzeroberfläche eines Ausführungsbeispiels,

Fig. **14**    als Illustration exemplarisch die Benutzeroberfläche eines Ausführungsbeispiels, in dem Fingerstreiche des Anwenders als Eingabe empfangen wurden,

Fig. **15**    als Illustration exemplarisch die Benutzeroberfläche eines Ausführungsbeispiels, in dem Fingerstreiche des Anwenders als Eingabe empfangen und zwecks Erkennung von Objekten verarbeitet wurden,

Fig. **16**    als Illustration exemplarisch die Benutzeroberfläche eines Ausführungsbeispiels, in dem der Fingerstreich des Anwenders als Eingabe zur Löschung eines nicht zum Objekt gehörenden Bildbereiches empfangen wurde, und

Fig. **17**    als Illustration exemplarisch die Benutzeroberfläche eines Ausführungsbeispiels, in dem das Ergebnis der in Fig. **16** ausgeführten Aktion dargestellt wird.

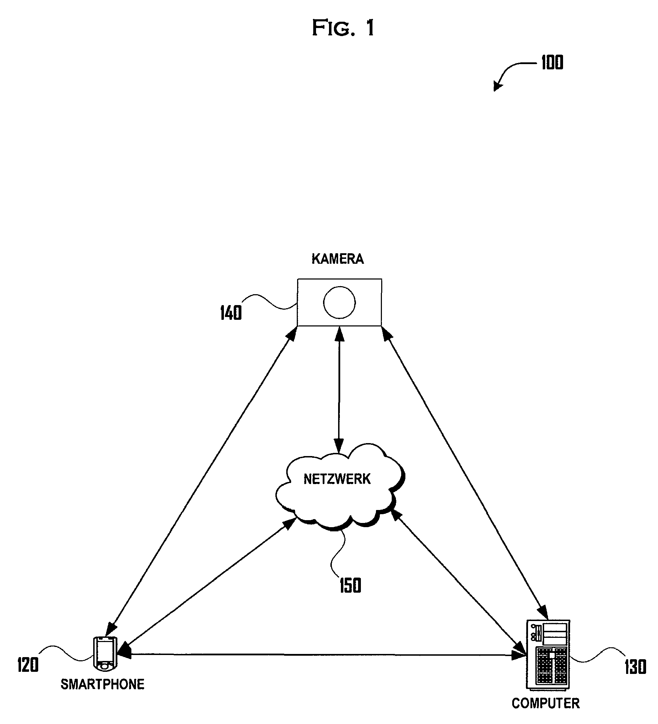

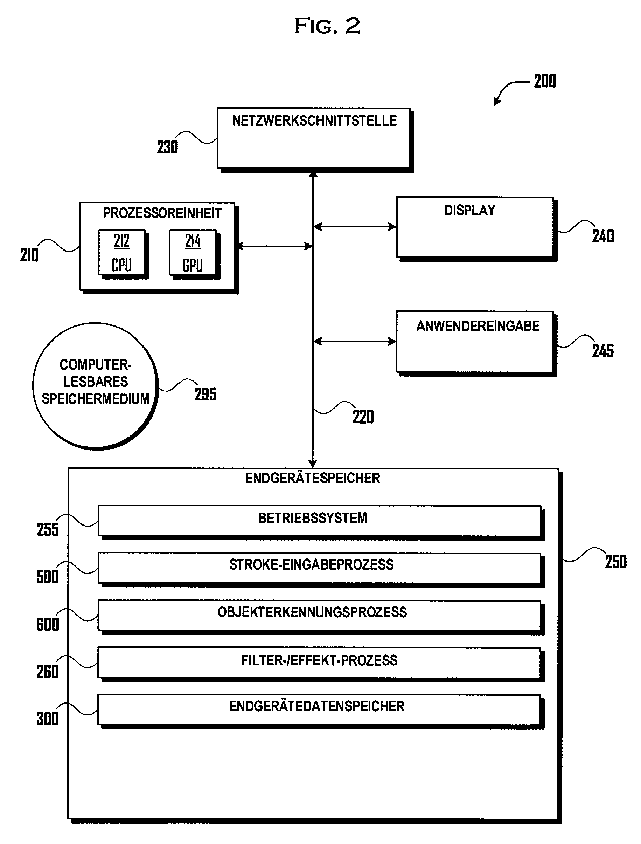

Fig. **1** zeigt als Netzwerk- und Geräte-Diagramm exemplarisch verschiedene Geräte, wie in diesem Dokument als Ausführungsform beschrieben. Eine Kamera **140,** ein mobiles Endgerät **120** und ein Personal Computer **130** sind als untereinander verbunden dargestellt, wobei die Verbindungen entweder direkt und/oder über ein Netzwerk **150,** welches etwa ein Ethernet-Netzwerk, das Internet (welches auch drahtlos angebunden sein könnte) und/oder ein drahtloses Netzwerk auf Basis von GSM, TDMA, CDMA, EDGE, HSPA, UMTS, LTE oder anderer von einem Anbieter drahtloser Netzwerktechnik angebotenen Standards sein kann. Die direkte Verbindung zwischen den Geräten kann durch Netzwerkverbindungen (ähnlich wie zuvor genanntes Netzwerk **150**) und/oder durch Bluetooth™, USB oder ähnliche Gerät-zu-Gerät Verbindungen abgebildet sein. Die Kamera **140,** das mobile Endgerät **120** und Personal Computer **130** sind ähnliche Computergeräte, die sich zum Beispiel durch ihre Benutzeroberfläche, das Netzwerk **150,** zu dem sie sich verbinden und/oder durch die Hard- und Software zur Eingabe und Ausgabe von Daten unterscheiden. Die Kamera **140,** Das mobile Endgerät **120** und der Personal Computer **130** werden als dienstanfordernde Geräte im Folgenden als "Endgerät" bezeichnet. Ein Endgerät ist in Fig. **2** illustriert. Beispiele an Endgeräten beinhalten Digitalkameras, Personalcomputer, Laptop-Computer, Tablet Computer, Smartphones, e-Reader oder ähnliche Computergeräte. Endgeräte werden von "Anwendern" benutzt.

Eine Verbindung zum Netzwerk **150** kann erfordern, dass das Endgerät Softwareroutinen ausführt, die beispielsweise die bis zu sieben notwendigen Schichten des OSI Modells zur Vernetzung von Computern bedienen. Das Netzwerk **150** bezieht Computer, Netzwerkverbindungen zwischen Computern sowie Softwareroutinen ein, die die Kommunikation zwischen Computern über solche Netzwerkverbindungen ermöglichen.

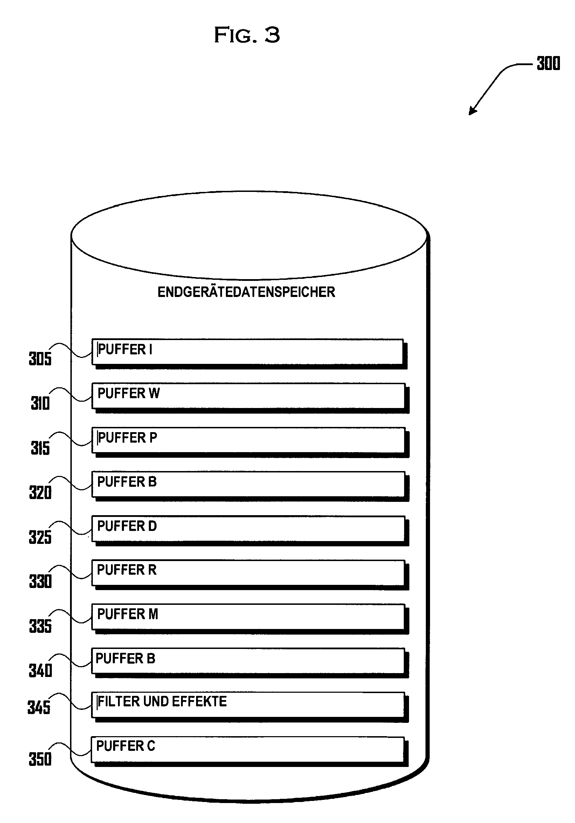

Wie im Weiteren dargelegt wird, beinhaltet ein Endgerät Datenstrukturen, die eine digitale Fotografie repräsentieren. Diese Datenstruktur wird im Folgenden als "Puffer I" bezeichnet (in Fig. **3** als Element **305** "Puffer I" dargestellt"). Ein Endgerät kann entweder verwendet werden um direkt selbst die zu verarbeitende digitale Fotografie aufzunehmen, oder aber um die digitale Fotografie eines zweiten Endgerätes zu verarbeiten, nachdem diese an das erste Endgerät übertragen oder übergeben wurde.

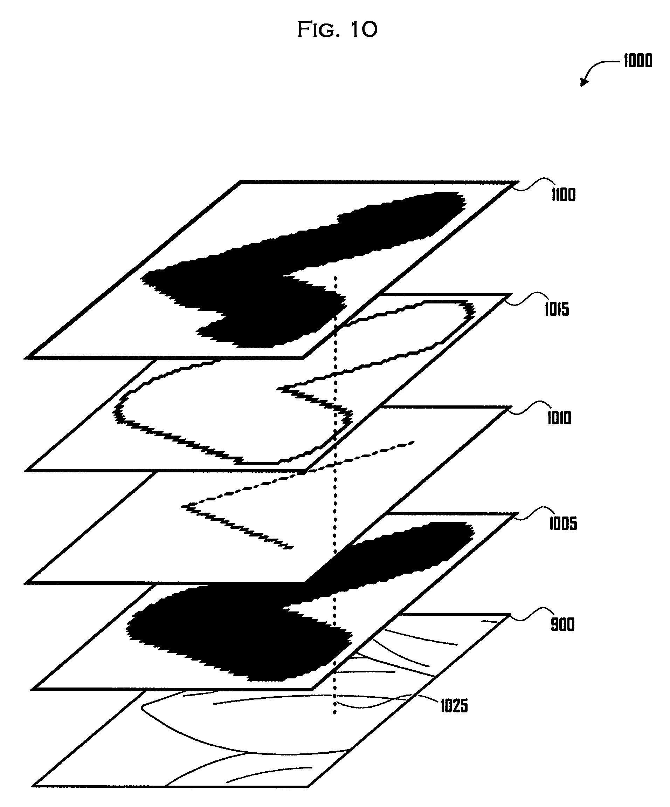

Wie im Folgenden genauer dargelegt wird, führt das Endgerät verschiedene Softwareroutinen aus, wie etwa einen Stroke-Eingabeprozess **500,** einen Objekterkennungsprozeß **600,** und/oder einen Filter/Effekt-Prozess **260.** Der Stroke-Eingabeprozess **500** wird verwendet, um Stroke-Eingaben zu erfassen, die ein Anwender etwa typischerweise durch Berührungen in Form eines Fingerstreichs auf einem Touchscreen oder aber auch durch andere Eingabemethoden (wie durch Finger, Stylus, Maus, Trackball, Steuerkreuze oder durch Gesten o.ä) erzeugt hat. Diese Stroke-Eingaben kommunizieren des Anwenders Absicht, bestimmte Pixelbereiche innerhalb des Puffer I **305** als ein Objekt beinhaltend zu kennzeichnen. Es wird darauf hingewiesen, dass der Begriff "Pixel" im Folgenden, abhängig vom Kontext, sowohl die Position eines Pixels innerhalb eines Puffers als auch die im Pixel kodierte Farbinformation bezeichnen kann. Wenn im Folgenden zum Beispiel zwei Pixel in zwei verschiedenen Puffern als "korrespondierend" bezeichnet werden, ist dies so zu verstehen, dass beide Pixel die gleiche Position in ihrem beinhaltenden Puffer einnehmen. Die vertikale, gestrichelte Linie in Fig. **10** illustriert diese Korrespondenz zwischen den Pixeln in fünf verschiedenen Puffern. Des Weiteren können, wie im Folgenden dargelegt wird, Pixel-Puffer entweder eindimensional (wie etwa ein Alphakanal-Puffer) oder mehrdimensional (wie etwa ein Puffer, der RGB-Daten beinhaltet) sein. Generell ergibt sich die Art des jeweiligen Puffers aus dem Kontext der Beschreibung: Wird zum Beispiel beschrieben, das ein Pixel den Wert **1** erhält, indiziert dies die Beschreibung eines eindimensionalen Puffers. Die Puffer-Dimensionalität ist ein Parameter, der je nach Ausführungsform der Erfindung veränderlich sein kann, solange das zugrundeliegende Ziel erreicht wird; so kann ein mehrdimensionaler Puffer zum Beispiel auch als eindimensionaler Puffer behandelt werden. Im Allgemeinen sind die im Folgenden Puffer R **330,** Puffer B **320,** Puffer D **325,** Puffer P **315,** und Puffer M **335** bezeichneten Puffer eindimensional; die Puffer W **310** und Puffer I **305** hingegen mehrdimensional. Der Objekterkennungsprozeß **600** identifiziert ein oder mehrere Pixelobjekte innerhalb der Pixelmenge, die Ausgabe des Stroke-Eingabeprozesses **500** ist. Diese Pixelobjekte werden in Puffer M (in Fig. 3 als "Puffer M" **335** referenziert) gespeichert. Wie nachfolgend dargelegt, können die mit Pixeln in Puffer M **335** korrespondieren Pixel in Puffer I **305** durch einen oder mehrere Filter/Effekt-Prozesse **260** verändert werden, welcher einen Filter bzw. einen fotografischen Effekt appliziert. Die Pixel in Puffer I **305,** die mit Pixeln in Puffer M **335** korrespondieren, können auch als alleinstehendes, von Puffer I **305** unabhängiges Bild extrahiert und verwendet werden.

Wenn dieses Dokument einen Computer beschreibt, der entweder zu einem zweiten Computer eine Verbindung aufbaut (etwa, wenn ein Endgerät eine Verbindung zu einem zweiten Endgerät herstellt) oder ein Computer eine Verbindung zu einem Datenspeicher (wie dem Endgeräte-Datenspeicher **300)** herstellt, so ist dies derart zu verstehen, dass derlei Verbindungen zu, durch oder über die andere der beiden Komponenten geschehen. Die Aussage etwa, dass ein Computer Daten an das Endgerät **200** schickt, soll derart verstanden werden, dass der Computer eine Verbindung zum Datenspeicher **300** des Endgerätes aufbaut bzw. Daten dorthin sendet. Die Begriffe "Datenbank" und "Datenspeicher" sind zudem in ihrer Bedeutung gleichzusetzen. Obwohl hier als in einer physikalischen Einheit integriert dargestellt, können Computer und Datenbanken auch als übliche (bzw. alleinstehende) physikalische Einheiten bereitgestellt werden. Auch die Softwareroutinen und Datengruppen der beschriebenen Software können, obwohl hier als innerhalb eines einzelnen Computergerätes ablaufend dargestellt, ggf. in entfernten oder virtualisierten Computergeräten gespeichert werden und/oder ablaufen.

Fig. 2 stellt das funktionale Blockdiagramm eines exemplarischen Endgerätes inklusive einiger Datenstrukturen und Komponenten desselben dar. Das Endgerät **200** beinhaltet mindestens einen Prozessor **210,** Endgerätespeicher **250,** ein Display **240** und eine Anwendereingabe **245,** alle über den Bus **220** mit der Netzwerkschnittstelle **230** verbunden. Die Prozessoreinheit **210** kann sowohl aus einer oder mehreren allgemein üblichen CPUs (Central Processing Units) **212** als auch aus einer oder mehreren anwendungsspezialisierten GPUs (Graphical Processing Units) **214** bzw. einer Kombination aus beiden bestehen. Die Komponenten der Prozessoreinheit **210** können auch durch das Betriebssystem **255** verwendet werden, um verschiedene Funktionen auszuführen, die von Routinen des Endgerätes angefordert werden. Die Netzwerkschnittstelle **230** kann verwendet werden, um Verbindungen mit dem Netzwerk **150** oder direkte Geräte-Verbindungen mit anderen Endgeräten herzustellen. Der Endgerätespeicher **250** beinhaltet üblicherweise RAM (Random Access Memory), ROM (Read Only Memory) und ein Massenspeichermedium wie eine Festplatte oder Flash-Speicher. Der Endgerätespeicher **250** speichert Programmcode und Softwareroutinen wie zum Beispiel den Stroke-Eingabeprozess **500,** den Objekterkennungsprozeß **600,** den Filter/Effekt-Prozess **260,** aber beispielsweise auch Routinen zur Aufnahme digitaler Photos, zur Verwaltung digitaler Bilder und/oder zur Bearbeitung digitaler Bilddaten (von denen der Filter/Effekt-Prozess **260** eine Unterroutine sein kann), Browser-, Email- und Serverroutinen aber auch Client- oder Datenbankanwendungen wie weiter unten beschrieben. Des Weiteren beinhaltet der Endgerätespeicher **250** auch das Betriebssystem **255.** All diese Softwarekomponenten können von einem nicht-flüchtigen, computerlesbaren Speichermedium **295** in den Endgerätespeicher **250** des Endgerätes geladen werden, wobei sich dieses auch außerhalb des Computersystem befinden und auch nur temporär über ein Netzwerk bzw. direkt verbunden sein kann.

Das Endgerät **200** kann auch Hardware enthalten, die gezielt Anwendereingaben **245** unterstützt, wie zum Beispiel ein Touchscreen, eine Kamera, eine Tastatur, eine Maus, ein Stylus, ein Mikrophon, Beschleunigungssensoren und dergleichen. Diese Hardware kann auch zugleich als Display **240** ausgebildet sein, wie etwa bei einem Touchscreen, der auf Kontakt mit Fingern oder einem Stylus interaktiv reagiert.

Das Endgerät **200** kann auch einen Bus **220** verwenden, um mit dem Endgerätedatenspeicher **300** zu kommunizieren. In verschiedenen Ausführungsbeispielen kann der Bus **220** als serieller Hochgeschwindigkeitsbus, als DMA-Direktzugriff, als DAS ("Direct Attached Storage") als SAN ("Storage Area Network" oder in anderer, zielführender Form ausgebildet sein, die auch die Netzwerkschnittstelle **230** einbeziehen kann. Das Endgerät **200** kann in einigen Ausführungsformen auch viel mehr Komponenten enthalten als hier abgebildet, es ist zur Illustration der beschriebenen Lösung aber nicht notwendig, alle diese Komponenten darzustellen.

Das Endgerät **200** umfasst Datengruppen für Routinen, wie etwa den Stroke-Eingabeprozess **500,** den Objekterkennungsprozeß **600** und den Filter/Effekt-Prozess **260.** Weitere Datengruppen für andere Routinen, wie etwa einen Web-Browser oder einen Webserver, können ebenfalls auf einem Endgerät **200** präsent sein und ausgeführt werden. Browserroutinen können dabei zum Beispiel eine Schnittstelle bereitstellen, mit der man mit anderen Endgeräten gemäß Fig. 1, aber auch mit anderen, entfernten Endgeräten interagieren kann. Web-Browser und Webserver seien hier als Technologie zur Bereitstellung einer Benutzeroberfläche exemplarisch genannt, sie können auch durch äquivalente Techniken ersetzt werden, die das Anzeigen und Bereitstellen von Informationen auf einem Endgerät ermöglichen, etwa durch native Anwendungen ("Apps") auf mobilen Endgeräten.

Fig. 3 ist das funktionale Blockdiagramm des Endgerätedatenspeichers **300,** wie er auch in Fig. 2 referenziert ist. Die Komponenten des Endgerätedatenspeichers **300** sind Datengruppen, die von den nachfolgend beschriebenen Routinen unterschiedlich verwendet werden.

Die Datengruppen, die von den in Fig. 3 illustrierten Routinen verwendet werden, können als Zelle in einer Spalte oder als alleinstehender Wert in definierter Struktur innerhalb eines digitalen Dokuments bzw. einer Datei repräsentiert sein. Obwohl im Folgenden meist als einzelner Datensatz oder Eintrag bezeichnet, können Einträge auch mehr als einen Datenbankeintrag enthalten. Die Datensätze können Zahlen, numerische Operationen, binäre Werte, logische Werte, Matrizen, Text, Zeichenketten, Zeichenkettenoperatoren, zusammengesetzte Werte, fallabhängige Logik, Tests oder ähnliche Datenstrukturen sein, repräsentieren oder kodieren.

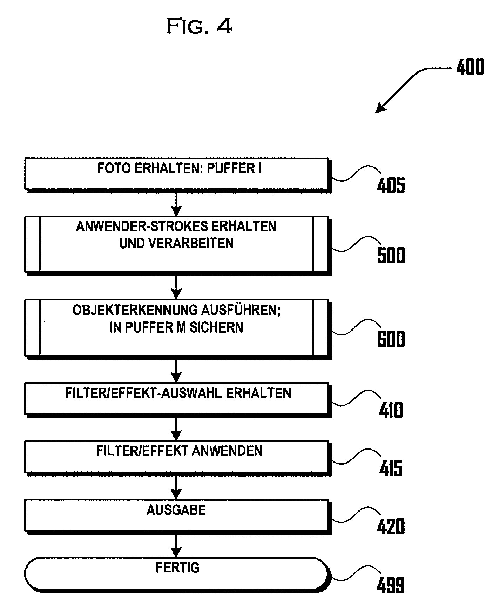

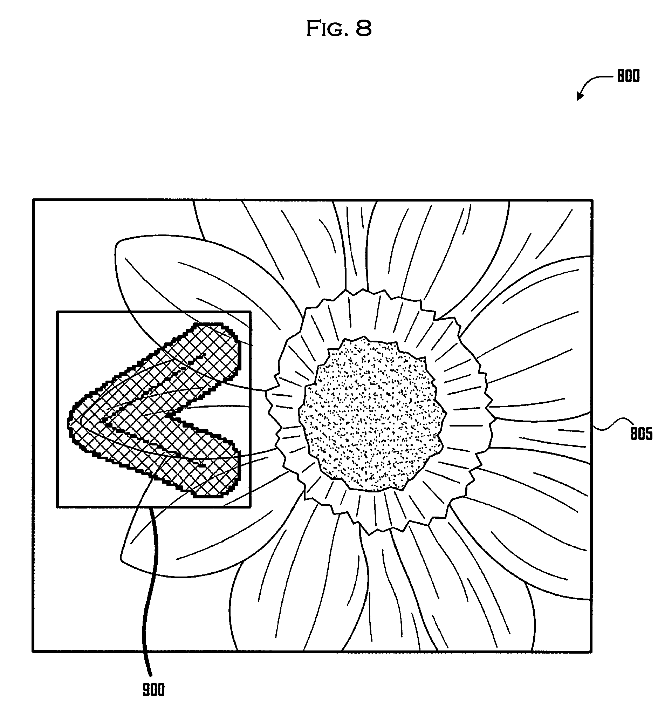

Fig. **4** ist ein Flussdiagramm, das einen Prozess darstellt, in dem ein Endgerät Anwendereingaben in Form von Strokes erhält und verarbeitet, eine Objekterkennung ausführt, einen Filter oder Effekt anwendet und schließlich das finale Ergebnis des Gesamtprozesses präsentiert. In Schritt **405** erhält das Endgerät ein digitales Foto bzw. Zugriff auf ein solches, dessen beinhaltete Pixeldaten im Folgenden als Puffer I **305** bezeichnet werden. Puffer I **305** ist als Element **805** in Fig. **8** illustriert (Element **900,** welches ebenfalls in Fig. **8** illustriert wird, ist hingegen nicht Bestandteil von Puffer I **305**). Der Puffer I **305** kann nun zum Beispiel durch eine entsprechende Darstellungsroutine auf dem Display **240** des Endgerätes angezeigt werden.

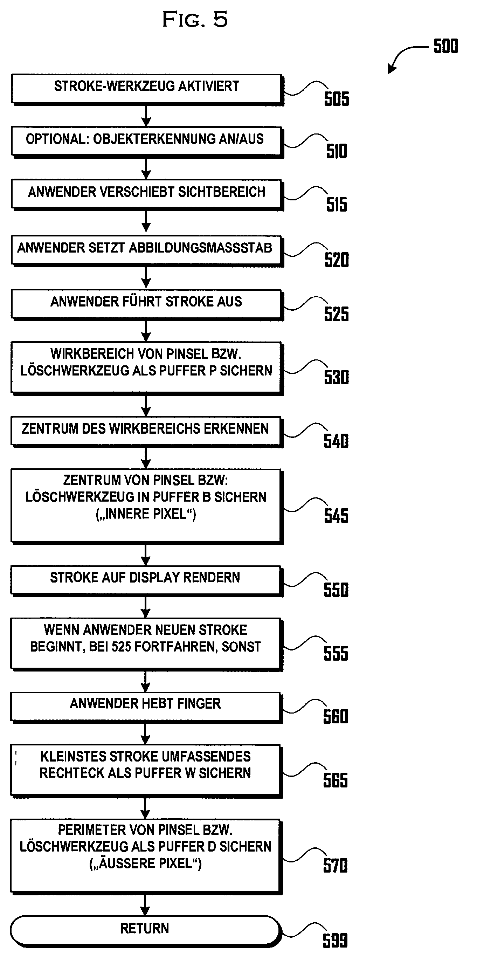

Im Schritt **500** empfängt und verarbeitet das Endgerät Stroke-Eingaben (Fingerstreiche) des Anwenders durch den Stroke-Eingabeprozess **500,** wie in Fig. **5** detailliert ausgeführt wird. Wie an anderer Stelle beschrieben, empfängt der Stroke-Eingabeprozess **500** Eingaben durch einen Anwender, der seinen Finger auf einem Touchscreen bewegt ("Fingerstreich") oder auch durch andere Anwendereingaben (wie Stylus, Maus, durch Gesten etc.). Diese Stroke-Eingaben kommunizieren des Anwenders Absicht, diejenigen Pixel in Puffer I **305** zu beschreiben, die ein Objekt repräsentieren. Wie nachfolgend beschrieben, können die so identifizierten Pixel im Display **240** visuell hervorgehoben werden, etwa durch Einfärbung, Änderung der Luminanz, eine gezeichnete Linie oder ähnliche optische Verfahren.

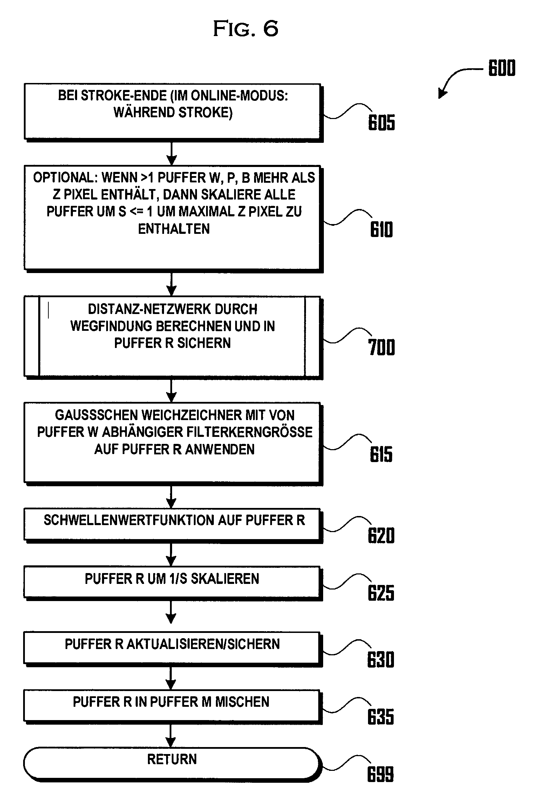

In Schritt **600** führt das Endgerät die Pixel-Objekt-Erkennung aus, beispielsweise unter Verwendung des Objekterkennungsprozesses **600,** der in der Beschreibung zu Fig. **6** ausführlich erläutert wird. Wie an anderer Stelle beschrieben, identifiziert der Objekterkennungsprozeß **600** ein oder mehrere durch Farbkanten abgegrenzte Pixelobjekte (im Folgenden "Objekte" genannt), die sich nahe jener Pixel befinden, die das Ergebnis des Stroke-Eingabeprozesses **500** beschreiben. Diese Objekte werden in einem Masken-Puffer ("Puffer M", in Fig. **3** als Element **335** illustriert) abgelegt, der unabhängig von Puffer I **305** behandelt werden kann.

In Schritt **410** erhält das Endgerät eine Filter- oder Effektauswahl, etwa wie vom Anwender durch Verwendung des Filter-/Effektprozesses **260** vorgesehen. Beispiele solcher Filter und Effekte beinhalten Einstellung von Helligkeit, Kontrast, Farbsättigung, Weißbalance sowie Sepiatonungen, Nostalgiefilter, Simulation der Spezifika chemischer Filmemulsionen, Simulation der Alterung bestimmter chemischer Farbstoffe etc. Die für den Filter-/Effektprozess **260** benötigten Daten können aus dem Endgeräte-Datenspeicher **300** und den Filter- und Effekt-Datensätzen **340** genommen werden. Wie an anderer Stelle beschrieben, kann Puffer M **335** auch für andere Zwecke verwendet werden; zum Beispiel zur Identifikation jener Pixel in Puffer I **305,** auf die ein Filter oder Effekt angewendet werden soll bzw. die kopiert, vorbereitet oder auf andere Weise als von Puffer I **305** separiertes Bild ausgegeben werden sollen. In Schritt **415** wird die zuvor definierte Auswahl an Filtern und Effekten auf die Pixel in Puffer M **335** angewendet, wie zum Beispiel durch den Filter-/Effektprozess **260** vorgesehen, um etwa das Endergebnis **345** zu erzeugen. In Schritt **420** kann das Endergebnis **345** oder ein abgeleitetes Ergebnis ausgegeben werden, etwa durch Darstellung auf dem Display **240** des Endgerätes. Wie nachfolgend genauer beschrieben, kann der gesamte Prozess **400** iteriert werden; während aller Iterationen kann der Anwender alternativ auch ein Löschwerkzeug benutzen, um die Auswahl der in Schritt **500** ausgewählten und in Schritt **600** identifizierten Pixel zu verändern.

Fig. **5** zeigt als Flussdiagramm ein Detail eines Prozesses zur Entgegennahme und Verarbeitung von Anwendereingaben in Form von Fingerstreich-Bewegungen ("Strokes"). Der dargestellte Prozess kann vom Stroke-Eingabeprozess **500** ausgeführt werden. In Schritt **505** kann der Anwender ein Pinsel- oder ein Löschwerkzeug über die Benutzeroberfläche aktivieren. Pinsel- und Löschwerkzeug arbeiten in sehr ähnlicher Art und Weise, das Pinselwerkzeug allerdings fügt Eingaben hinzu, während das Löschwerkzeug es ermöglicht, Teile zuvor gemachter Eingaben und/oder derer Ergebnisse zu entfernen. Pinsel- und Löschwerkzeug können dabei temporär optische Spuren im Display **240** des Endgerätes hinterlassen, wobei es zweckdienlich sein kann, die Spur etwas breiter zu zeichnen als es die Fingerspitze bzw. der Stylus des Anwenders ist, so dass der Anwender im Display **240** unmittelbar erkennen kann, welche Bildbereiche von seine Eingaben betroffen sind bzw. sein werden. In Schritt **510** kann die automatische Pixel-Objekt-Erkennung, wie sie vom Objekterkennungsprozeß **600** ausgeführt wird, durch den Anwender optional deaktiviert werden. Wie auch in anderen der dargelegten Schritte ist Schritt **510** optional und/oder kann in anderer Reihenfolge ausgeführt werden, etwa Schritt **505** vorausgehend. In Schritt **515** kann der Anwender den im Display **240** sichtbaren Bildausschnitt des Puffers I **305** verschieben und in Schritt **520,** etwa durch eine Zweifingerzangengeste, einen neuen Vergrößerungsmaßstab ("Zoom Level") einstellen bzw. akzeptieren. Wie es auch mit anderen Schritten der Fall ist, können die zuvor beschriebenen Schritte des Stroke-Eingabeprozesses **500** auch in anderer Reihenfolge ausgeführt werden, sowohl in Bezug zueinander, als auch in anderer Reihenfolge in Bezug auf andere Schritte; so kann der Anwender zum Beispiel den sichtbaren Bereich des Puffers I **305** noch vor Ausführung von Schritt **505** verschieben und skalieren. Die zur Einstellung von Schritt **515** und **520** gewünschten Werte können vom Anwender zweckdienlich über Gesten gesetzt werden, etwa eine Zweifinger-Gesten in öffnender, schliessender oder schiebender Weise oder aber andere Gesten, sofern sich diese eindeutig von der zur Stroke-Eingabe verwendeten Geste unterscheiden. Eine andere Ausführungsform erlaubt es auch oder außerdem, den Anwender explizit einen Modus bzw. ein Werkzeug auswählen zu lassen, um den gewünschten sichtbaren Bildausschnitt und/oder den Vergrößerungsmaßstab desselben durch solche oder ganz andere Methoden festzulegen. Der Abbildungsmaßstab bestimmt die Auflösung der Pixel in Puffer W **310.**

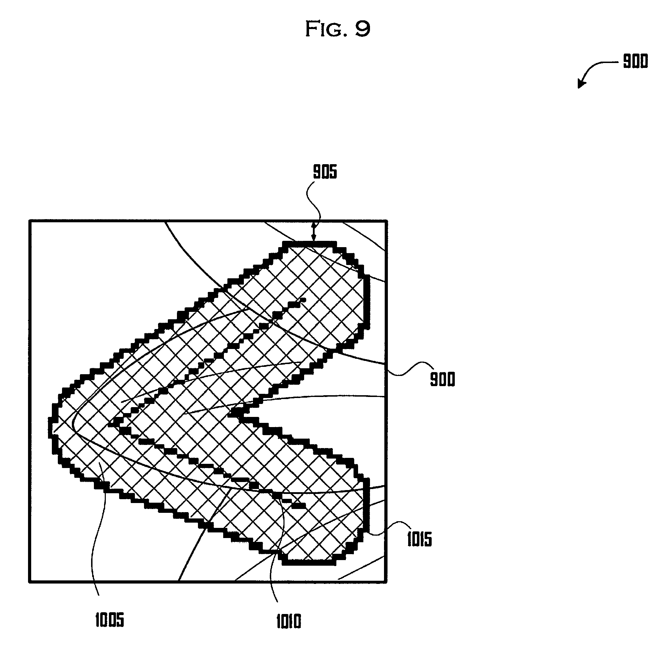

In Schritt **525** führt der Anwender einen einzelnen Stroke aus, etwa indem er seine Zeigefingerspitze, während diese ununterbrochen Kontakt zum Touchscreen hat und hält, von einem durch Koordinaten definierten Ort zu einem anderen Ort auf dem Display **240** bewegt, während das Pinsel- oder das Löschwerkzeug aktiviert ist. In Schritt **530** speichert der Stroke-Eingabeprozess **500** den Wirkbereich des Pinsels bzw. Löschwerkzeuges in Puffer P **315** (Element **1005** in Fig. **9** und Fig. **10).** Die Werte in Puffer P **315** sind entweder **1,** für alle Pixel die innerhalb des Wirkbereichs liegen, oder **0,** für alle Pixel außerhalb des Wirkbereichs. In Schritt **540** des Stroke-Eingabeprozesses **500** wird der Mittelpunkt des Pinsel- bzw. Löschwerkzeuges über den in Schritt **525** erzeugten Pfad gefunden, dieser kann zum Beispiel dem Mittelpunkt der eingesetzten Werkzeugspitze entsprechen. Die Koordinaten des Werkzeugmittelpunktes werden mindestens zu Beginn und zu Ende eines Strokes aufgezeichnet. Die Verbindungslinie zwischen den aufgezeichneten Koordinaten kann zum Beispiel durch die die Koordinaten verbindende Linien definiert werden, wobei diese Linien durch OpenGL®, durch eine linear-mathematische Linienzeichenfunktion, durch einen abrundenden Polynomzug (Splinefunktion) o.ä. erzeugt werden können. Die Strichstärke der erzeugten Linie kann Parameter des Stroke-Eingabeprozesses **500** sein und kann zum Beispiel auf **1** Pixel festgelegt werden. In Schritt **545** wird die so den Pfad des Strokes definierende Linie in Puffer B **320** (Element **1010** in Fig. **9** und Fig. **10)** abgelegt. Die Werte des Puffer B **320** können **1** sein, für Pixel die die Linie definieren, sowie **0,** für Pixel, die dies nicht tun. Auf die in Puffer B **320** repräsentierten Linien wird fortan auch als "innere Pixel" verwiesen, da die Pixel dieser Linien innerhalb der Flächenabbildung des zu isolierenden Objektes liegen.

In Schritt **550** kann das Ergebnis der Operation als visuelles Feedback auf dem Display **240** grafisch dargestellt werden, was zweckmäßigerweise schon während des Stroke-Eingabeprozesses durch den Anwender geschieht. Eine geeignete Darstellung ist die Ausgabe des Puffers P **315**. Während Fig. **10** den Inhalt des Puffers P **315** an Element **1005** in reinem Schwarz darstellt, ist es dienlich, den Inhalt des Puffers P **315** (und/oder den anderer Puffer wie in Fig. **10** illustriert) als Halbton, schattierte oder gefärbte Fläche und/oder durch Einsatz von Transparenz derart darzustellen, dass die darunter liegenden Pixel des Puffers I **305** noch zu erkennen sind.

Schritt **555** zeigt, dass die Schritte **525** bis **555** iterativ wiederholt werden, solange der Anwender weitere Strokes macht.

In Schritt **560** beendet der Anwender seine Eingaben **245** etwa durch Anheben seiner Finger vom Touchscreen-Display, loslassen einer Maustaste oder andere erkennbare Moduswechsel.

In Schritt **565** ermittelt der Stroke-Eingabeprozess **500** Koordinaten und Größe des kleinsten Rechtecks, welches den Wirkbereich der in den Schritten **525** bis **555** erzeugten Strokes zusätzlich einer definierten Polstergröße ("Padding") umschliesst. Die mit dem Rechteck korrespondierenden Pixel aus Puffer I **305** werden als neuer Puffer W **310** abgelegt. Fig. **8** illustriert grafisch den Inhalt des Puffers W als Element **900** (und Puffer I **305** als Element **805;** die Puffer P, B und D sind hier ebenfalls sichtbar, jedoch nicht nummeriert). Fig. **9** illustriert den Puffer W **310** isoliert als Element **900,** einen beispielhaften Stroke **1010** inklusive Wirkbereich **1005** und Aufpolsterung **905** darstellend. Fig. **10** illustriert die verschiedenen Puffer als separate Ebenen.

In Schritt **570** ermittelt der Stroke-Eingabeprozess **500** den äußeren Umfang ("Perimeter") des kumulierten Wirkbereiches und speichert diesen in Puffer D **325** (Element **1015**). Die Werte in Puffer D **325** sind entweder **1** für Pixel auf dem Perimeter oder **0** für Pixel außerhalb desselben. Das Ermitteln des Perimeters kann auf verschiedene Weise erfolgen. Eine zweckmäßige Ausführungsform der Erfindung analysiert den Inhalt des Puffers P **315** und ermittelt für jeden Pixel "p", zu welchem Wert die Inhalte der acht ihm direkt benachbarten Pixel sich aufsummieren. Nur wenn sich die Werte der acht Nachbarpixel zu **8** summieren oder "p" selber 0 ist, ist "p" nicht auf dem Perimeter. Wenn "p" aber auf dem Perimeter ist, wird der Wert **1** an entsprechend korrespondierender Stelle im Puffer D **325** abgelegt, ansonsten der Wert **0**.

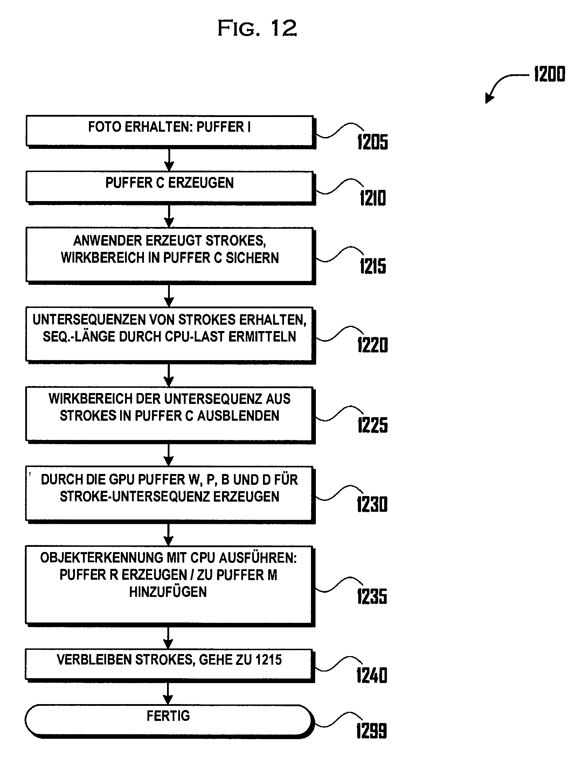

Fig. **6** ist ein Flussdiagramm zur detaillierten Illustration eines Prozesses zur Objekterkennung. Dieser Prozess kann beispielsweise durch den Objekterkennnungsprozeß **600** ausgeführt werden. Schritt **605** illustriert, dass der vorige Schritt **500** abgeschlossen wurde oder dass er parallel zu Schritt **500** ausgeführt wird, wie unten unter Fig. **12** ("online Modus") genauer dargelegt wird. So wie alle hier aufgeführten Schritte optional sein können, beschreibt Schritt **610** einen optionalen Schritt, in dem ermittelt werden kann, ob einer der Puffer W, P oder B mehr als "Z" Pixel enthält. Ist dies der Fall, können alle Puffer W, P und B um Faktor S <= 1 skaliert werden, um höchstens Z Pixel zu enthalten. Dieser Schritt kann die Ausführungsgeschwindigkeit des Objekterkennnungsprozesses **600** beschleunigen.

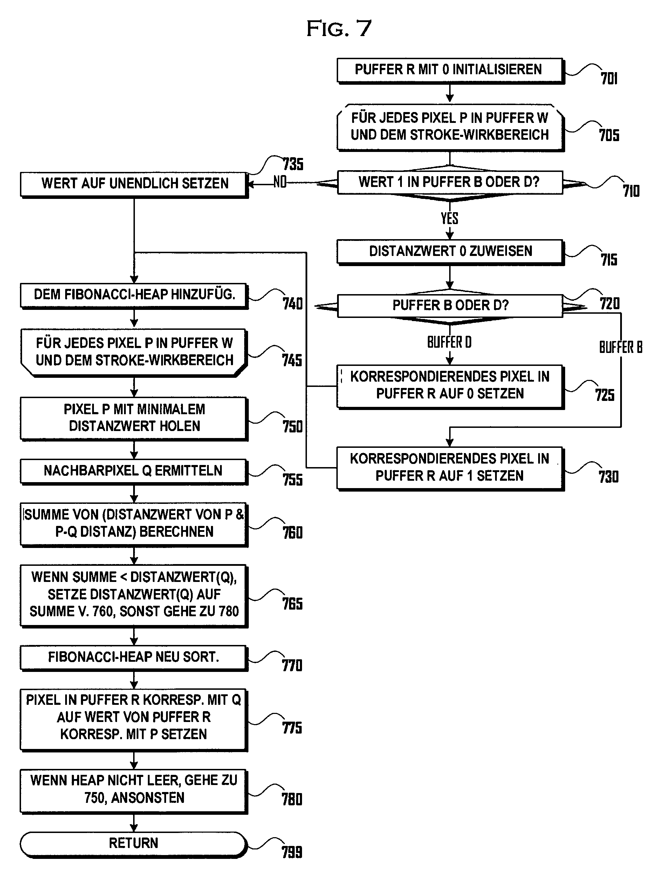

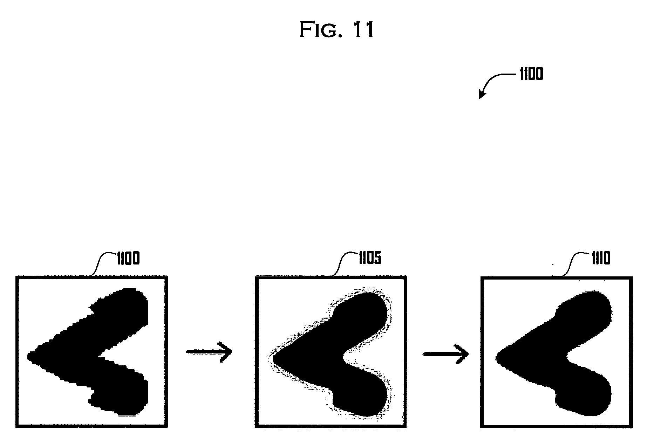

In Schritt **700** erzeugt der Objekterkennungsprozeß **600** Distanz-, Kosten- oder Graphentheoretisches Netzwerk aus Pixeln relativ zu den Puffern W, P, B und D, und benutzt dieses Netzwerk, um Pixel in einem Puffer R **330** (in Fig. **10** und **11** als Element **110** illustriert) als "innere Pixel" (mit dem Wert **1**) oder "äußere Pixel" (mit dem Wert **0**) zu markieren. Dieser Schritt wird in Fig. **7** genauer dargelegt und illustriert.

In Schritt **615** wird auf Puffer R **330** ein Gaußscher Weichzeichner oder eine ähnliche Weichzeichnerfunktion angewendet, wobei dessen Filterkerngröße mit den Abmessungen von Puffer W **310** skaliert. Hierdurch wird sichergestellt, dass die Menge an erzeugter Kantenunschärfe relativ zur Größe des Fensters W ist, also kleinere Fenster W entsprechend weniger stark weichgezeichnet werden als größere Fenster W. Der Effekt des Gaußschen Weichzeichners ist grafisch in Fig. **11** illustriert, in dem Element **1100** (den Puffer R **330** repräsentierend) durch den Gaußschen Weichzeichner zu Element **1105** transformiert wird. Eine Rampen-Schwellenwertfunktion T(p) erzeugt an den weichgezeichneten Kanten des Puffers R **330** saubere, weiche Kanten mit einer Rampe, die u.a. Aliasing-Artefakte verhindert. Eine mögliche Schwellenwertfunktion lautet wie folgt (wobei "p" ein Pixel ist):

$$T(p)=$$

$$p < p0: 0$$

$$p >= p0 \text{ und } p < p1 : (p - p0)/(p1 - p0)$$

$$p >= p1: 1$$

Der Effekt der Schwellenwertfunktion ist grafisch in Fig. **11** illustriert wobei Element **1105** das durch Weichzeichner und Schwellenwertfunktion transformierte Element **1100** darstellt. Das Ergebnis dieser Transformationen kann anschließend (überschreibend) zurück in Puffer R **330** geschrieben werden.

Schritt **625** illustriert, dass Puffer R **330** um Faktor **1**/S (also den Kehrwert aus Schritt **610**) auf die ursprünglichen Abmessungen des Puffers W **310** skaliert werden kann. In Schritt **630** kann das Ergebnis aus Schritt **625** in den Puffer R **330** geschrieben werden. Schritt **635** sieht vor, dass der Puffer R **330** in den Puffer M zusammengemischt werden kann. Erfolgte die Eingabe durch das Pinselwerkzeug (wurde also "gemalt"), wird beim Zusammenmischen der Maximalwert der Quellpixel (Puffer R **330**) oder der Zielpixel (Puffer M **335**) verwendet; erfolgte die Eingabe hingegen durch das Löschwerkzeug (wurde also "radiert"), wird beim Zusammenmischen der Minimalwert von **1** - Quellpixel (Puffer R **330**) oder **1** - Zielpixel (Puffer M **335**) verwendet. Hierdurch wird sichergestellt, dass die Zusammenmischfunktion aufeinanderfolgende Ergebnisse (sowohl vom Pinsel- als auch vom Löschwerkzeug ausgehend) korrekt akkumuliert.

Fig. **7** ist ein Flussdiagramm, welches illustriert, wie ein Prozess zur Erzeugung eines Pixel-Distanz-Netzwerks und die Anwendung von Wegfindungsalgorithmen in diesem Netzwerk benutzt werden, um Objektpixel zu ermitteln. Ziel dieses Flussdiagramms ist es, darzulegen, wie der kürzeste Weg zwischen einem beliebigen Pixel p in Puffer W **310,** welches ein korrespondierendes Pixel mit Wert **1** in Puffer P **315** hat, zu Pixeln mit einem Wert von **1** in entweder Puffer B **320** oder Puffer D **325** gefunden werden kann. Den kürzesten Pfad zu ermitteln (im Folgenden als "Wegfindung" bezeichnet) kann auf verschiedene Weisen erreicht werden, etwa durch Anwendung des Dijkstra Algorithmus, des Bellman-Ford Algorithmus, des A* Such-Algorithmus, des Floyd-Warshall Algorithmus, des Johnson Algorithmus oder anderer geeigneter Algorithmen. Fig. **7** illustriert exemplarisch eine effiziente Methode, um diese Operation auszuführen und wendet dazu den Dijkstra Algorithmus und einen Fibonacci-Heap als Datenstruktur an.

In Schritt **701** werden zunächst alle Pixel in Puffer R **330** mit dem Wert **0** initialisiert. Die Schritte **705** bis **745** iterieren über jedes Pixel p in Puffer W **310,** das ebenfalls im Wirkbereich der Strokes liegt (also dessen jeweils korrespondierendes Pixel in Puffer P **315** den Wert **1** hat). In Schritt **710** wird geprüft, ob das mit p korrespondierende Pixel in Puffer B **320** oder Puffer D **325** den Wert **1** hat. Wenn keines der mit p korrespondierenden Pixel in Puffer B **320** oder Puffer D **325** den Wert **1** hat, wird in Schritt **735** am korrespondierenden Pixel in Puffer W **310** der Wert unendlich (bzw. ein Datentyp-Maximalwert bzw. ein sehr hoher Wert) abgelegt. Wenn jedoch mindestens eines der mit p korrespondierenden Pixel in Puffer B **320** oder Puffer D **325** den Wert **1** hat, wird in Schritt **715** p ein Distanzwert von **0** zugewiesen.

In Schritt **720** wird geprüft (falls nicht bereits geschehen), ob das mit p korrespondierende Pixel mit Wert **1** in Puffer B **320** oder Puffer D **325** gefunden wurde. Lag es in Puffer D **325,** wird in Schritt **725** das korrespondierende Pixel in Puffer R **330** auf Wert **0** gesetzt (und das Pixel damit als "äußeres" Pixel deklariert). Lag das korrespondierende Pixel mit Wert **1** aber in Puffer B **320,** wird in Schritt **730** das korrespondierende Pixel in Puffer R **330** auf Wert **1** gesetzt (und das Pixel damit als "inneres" Pixel deklariert). Das Pixel p wird dann in Schritt **740** dem Fibonacci-Heap hinzugefügt, woraufhin der Prozess zu Schritt **705** zurückkehrt, um weiter durch alle Pixel p in Puffer W **310** zu iterieren, die auch im Wirkbereich des Strokes liegen, also deren korrespondierendes Pixel in Puffer P **315** den Wert **1** hat.

Wenn alle Pixel p dem Fibonacci-Heap hinzugefügt wurden, wird in Schritt **750** ein Pixel mit kleinstem Distanzwert ausgewählt. In Schritt **755** werden nun die Nachbarpixel q dieses Pixels p ausgelesen. In Schritt **760** wird nun die Summe aus einerseits den Distanzwerten von p sowie andererseits der p-q-Distanz errechnet. Die p-q-Distanz kann beispielsweise die euklidische Distanz zwischen den Farben in jedem der beiden Pixel sein, wobei deren jeweilige Rot-, Grün- und Blaukomponenten (in **[0,1],** ermittelt aus den Pixelfarben des Puffers W **310)** als Koordinaten in der Distanzfunktion verwendet werden. In Schritt **765** wird geprüft, ob die in Schritt **760** ermittelte Summe kleiner als der Distanzwert von q ist. Ist dies der Fall, wird der Distanzwert von q auf den Wert, der in Schritt **760** ermittelten Summe (zurück-)gesetzt. Ist dies nicht der Fall, wird mit der Ausführung von Schritt **780** fortgefahren. In Schritt **770** wird der Fibonacci-Heap nach kleinstmöglichem Distanzwert neu sortiert. In Schritt **775** wird der Wert des mit q korrespondierenden Pixels in Puffer R **330** auf den Wert des Pixels in Puffer R **330** gesetzt, das mit Pixel p korrespondiert. In Schritt **780** wird geprüft, ob der Fibonacci-Heap leer ist. Ist er es nicht, wird der Prozess bei Schritt **750** fortgesetzt. Ist er es, kehrt der Prozess in Schritt **799** zu Schritt **615** in Fig. **6** zurück.

Fig. **8** ist eine grafische Illustration der Inhalte der Puffer W, I, P, B und D. Fig. **8** wird im Rahmen anderer Abbildungen genauer erläutert.

Fig. **9** ist eine grafische Illustration der Inhalte der Puffer W, P, B und D. Fig. **9** wird im Rahmen anderer Abbildungen genauer erläutert.

Fig. **10** ist eine grafische Illustration der Inhalte der Puffer R, D, B und P. Fig. **10** wird im Rahmen anderer Abbildungen genauer erläutert.

Fig. **11** ist eine grafische Illustration des Inhalts von Puffer R, Anwendung eines Gaußschen Weichzeichners und einer Rampen-Schwellenwertfunktion. Fig. **11** wird im Rahmen anderer Abbildungen genauer erläutert.

Fig. **12** ist ein Flussdiagramm zur Illustration eines Prozesses, in dem ein Endgerät AnwenderEingaben parallel entgegennimmt und verarbeitet. Im in Fig. **4** beschriebenen Ablauf werden der Stroke-Eingabeprozess **500** und der Objekterkennungsprozeß **600** seriell, also nacheinander ausgeführt. Im in Fig. **12** dargestellten Prozess werden diese Schritte hingegen im Wesentlichen parallel ausgeführt, wobei der Objekterkennungsprozeß **600** (das "Wegfinden") im Wesentlichen durch die CPU **212,** der Stroke-Eingabeprozess **500** ("malen") im Wesentlichen durch die GPU **214** ausgeführt wird.

In Schritt **1205** erhält das Endgerät ein aus Pixeln bestehendes digitales Photo (oder Zugriff auf ein solches). Dieses wird im Folgenden als Puffer I **305** referenziert. Der Puffer I **305** kann auf dem Display **240** des Endgerätes angezeigt werden. In oder vor Schritt **1210** wurde das Pinsel- oder Löschwerkzeug des Stroke-Eingabeprozesses **500** aktiviert (ähnlich wie in Schritt **505**) und der Anwender hat durch Verschieben und Skalieren den sichtbaren Ausschnitt des Puffers I **305** anpassen können (ähnlich wie in Schritt **515** und **520).**

In Schritt **1210** wird Puffer C **350** erzeugt. Dieser Puffer reflektiert den kumulierten Wirkbereich der Pinsel- und Lösch-Strokes, ähnlich Puffer P **315,** wobei der Puffer C **350** aber auf das Display **240** gerendert wird, um dem Anwender visuelle Rückmeldung zu geben, da der Puffer P **315** ja nur den dann-aktuellen Pinsel- bzw. Löschwerkzeug-Wirkbereich enthält, der nur mit dem einzelnen, zugehörigen Stroke korrespondiert, der im dann aktuellen Lauf von Schritt **1220** bis **1240** getätigt wurde. Wie auch Puffer M **335** kann Puffer C **350** für alle Eingabe-Strokes fortbestehen. In den nachfolgenden Schritten ist zu beachten, dass alle Modifikationen an Puffer C **350** auch auf das Display **240** gerendert werden.

In Schritt **1215** macht der Anwender einen oder mehrere Strokes, währenddessen (parallel) Schritt **1220** ausgeführt wird. Auch diese Strokes werden in Puffer C **350** gespeichert.

In Schritt **1220** empfängt und verarbeitet das Endgerät eine Stroke-Eingabe des Anwenders als Unter-Sequenz, also als Teil der gesamten durch den Anwender getätigten Strokes. Schritt **1220** bis **1240** werden auf einem dedizierten Thread ausgeführt, wobei, abhängig von Arbeitslast und den technischen Möglichkeiten des Endgerätes, mehrere Instanzen der Schritte **1220** bis **1240** parallel auf jeweils eigenen Threads ausgeführt werden können. Die Länge der Subsequenz kann eine fixe Größe sein, die zum Beispiel durch Ablauf eines bestimmten Zeitraums oder durch eine bestimmte Anzahl traversierter Pixel bestimmt wird; sie kann aber auch dynamisch über die dann-aktuelle Arbeitslast der CPU **212** ermittelt werden: Unterliegt die CPU **212** zum Beispiel gerade vergleichsweise geringer Arbeitslast, kann die Länge einer Untersequenz entsprechend kürzer definiert werden. Die Untersequenz eines vom Anwender getätigten Strokes kann generell durch den Stroke-Eingabeprozess **500** ("malen") von der GPU **214** empfangen und verarbeitet werden, die parallel stattfindende Objekterkennung **600** ("Wegfindung") wird aber im Wesentlichen von der CPU **212** ausgeführt, wodurch die ideale Länge einer Untersequenz von der derzeitigen Arbeitslast der CPU **212** abgeleitet werden kann.

In Schritt **1225** wird der Wirkbereich der Stroke-Untersequenz in Puffer C **350** optisch derart hervorgehoben, dass dem Anwender visuell mitgeteilt wird, dass seine jeweilige Eingabe gerade verarbeitet wurde. Die visuelle Hervorhebung kann zum Beispiel durch Ausblenden, Veränderung von Helligkeit, Farbe oder Anwendung von Transparenzeffekten geschehen.

In Schritt **1230** erzeugt die GPU **214** die Puffer W **(310)**, P **(315)**, B **(320)** und D **(325)**, entsprechend dem zuvor in Bezug auf Fig. **5** beschriebenen Prozess zur Erzeugung dieser Puffer, da eine Sequenz an Strokes durch Iteration zwischen den Schritten **525** und **545** verarbeitet werden kann (ein Durchlauf für jeden Stroke in der Sequenz). Schritt **550** wird in dieser Schleife jedoch ausgelassen, da das Rendern bereits durch Verwendung des Puffers C **350** geschieht.

In Schritt **1235** wird die Objekterkennung durch den Objekterkennungsprozeß **600** ausgeführt, wie in Fig.6 zuvor beschrieben, wobei nun Schritt **635** (Zusammenmischen von Puffer R **330** in Puffer M **335**) ebenfalls threadsafe ausgeführt wird, sodass die Ergebnisse der Stroke-Eingaben-Untersequenz eines jeden Threads, der die Schritte **1220** bis **1240** ausführt, sequentiell in die richtige Reihenfolge gebracht werden. In Schritt 1240 wird geprüft, ob noch weitere Strokes zu verarbeiten sind. Solange dies der Fall ist, wird an Schritt 1215 fortgefahren.

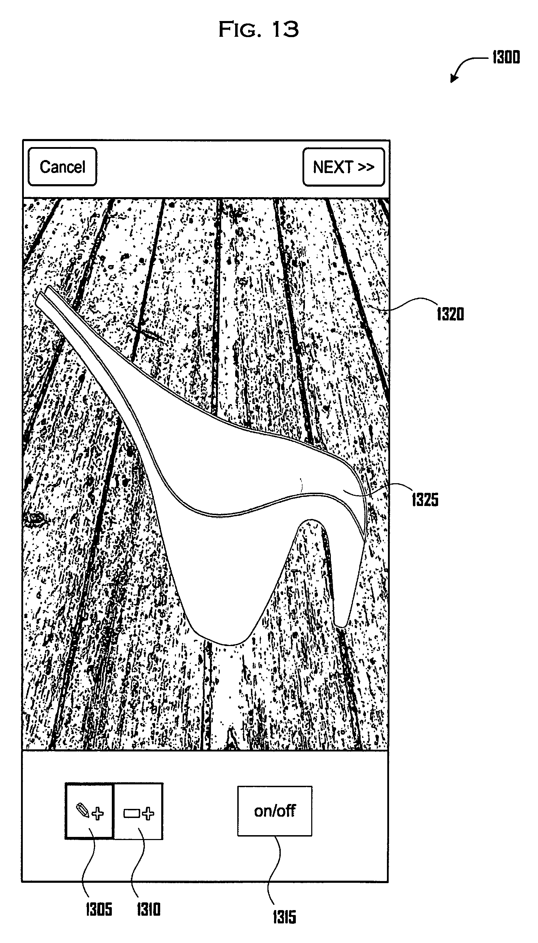

Fig. 13 demonstriert als Illustration eine Benutzeroberfläche einer möglichen Ausführungsform. In dieser Illustration wird eine Fotografie **1320** dargestellt, die als Beispielmotiv eine Gießkanne **1325** zeigt. Des Weiteren werden Werkzeug-Auswahlknöpfe zum Beispiel für das Pinselwerkzeug ("malen") 1305 und das Löschwerkzeug ("löschen") **1310** sowie eine Möglichkeit zum Ein- und Ausschalten der automatischen Objekterkennung 1315 dargestellt. Weitere Werkzeug-Auswahlknöpfe können dargestellt werden, wie etwa Werkzeuge zur Beeinflussung der Benutzeroberfläche, zum erneuten Berechnen der Objekterkennung oder eine Auswahlpalette fotografischer Filter und Effekte.

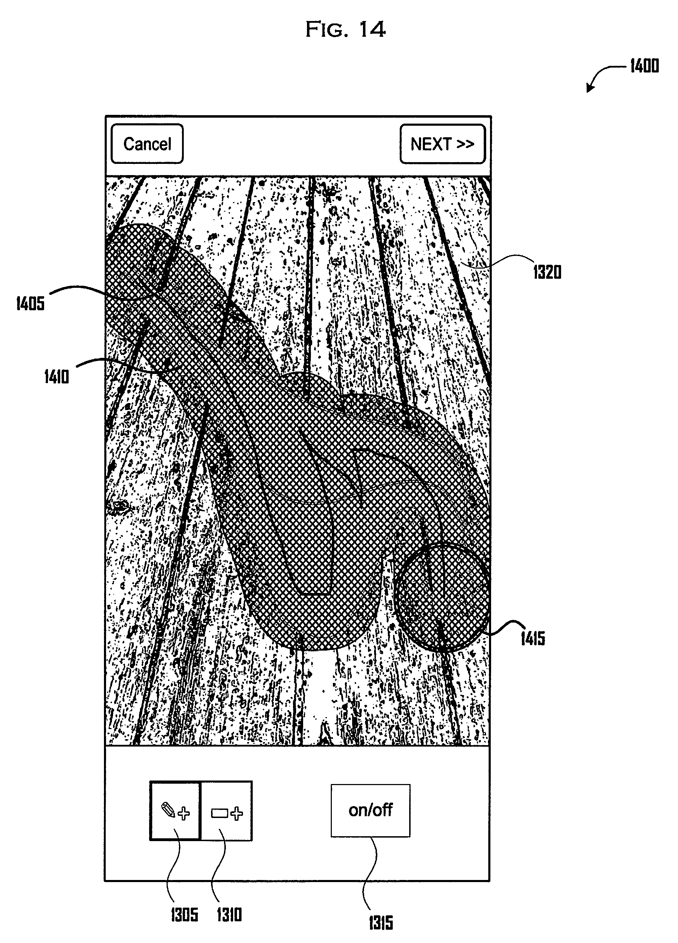

Fig. **14** demonstriert als Illustration eine Benutzeroberfläche einer möglichen Ausführungsform, in der durch den Anwender getätigte Stroke-Eingaben entgegengenommen wurden. Die Linie **1405** illustriert Puffer B **310** und zeigt die Koordinaten des Strokes, die der Anwender getätigt hat. Das zum Zeichnen ausgewählte Werkzeug ist das Pinselwerkzeug **1305.** Der Wirkbereich des Pinselwerkzeugs ist durch den Kreis **1415** illustriert. Die Fläche **1410** (im Rautenmuster kreuzschraffiert) ergibt sich durch Kumulation der Wirkbereiche entlang des Pfades, der durch den Stroke beschrieben wurde und in Puffer P **315** abgelegt ist.

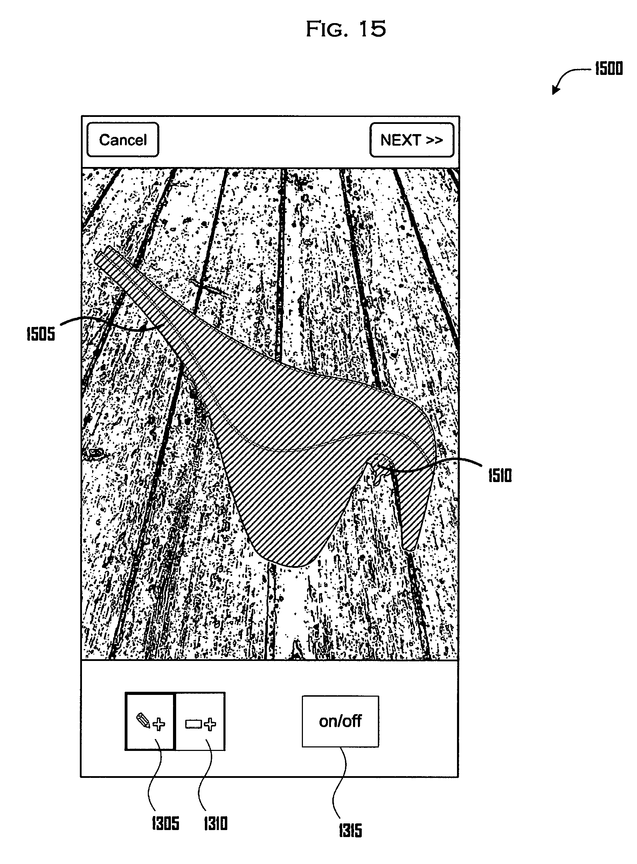

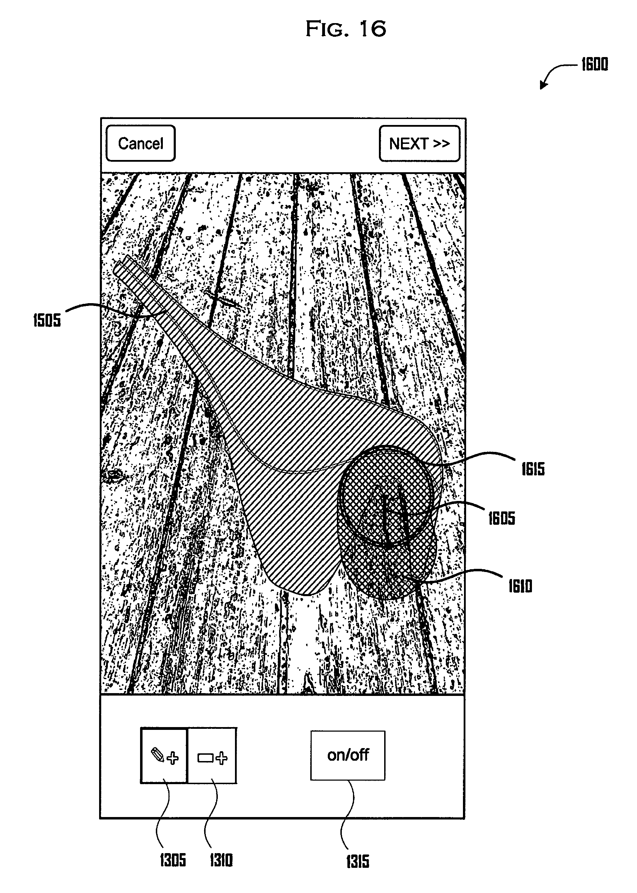

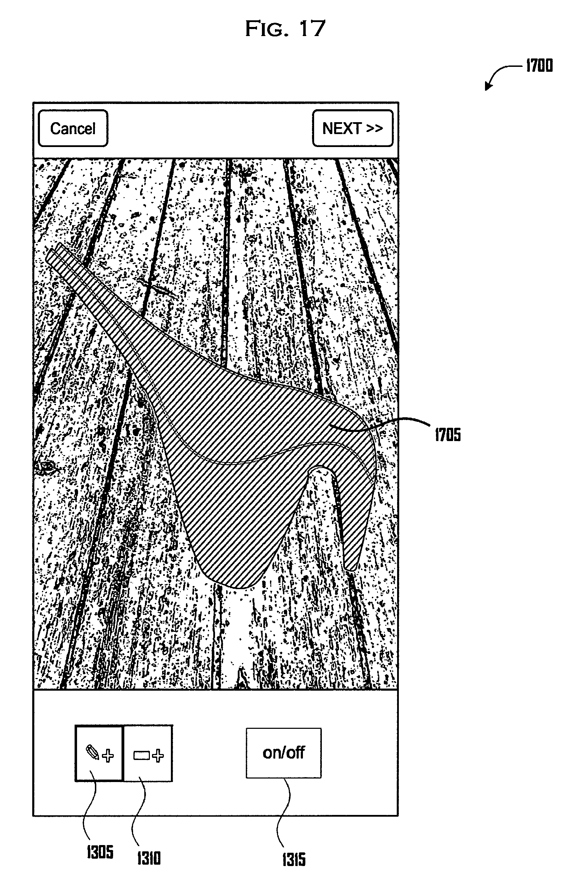

Fig. **15** demonstriert als Illustration eine Benutzeroberfläche einer möglichen Ausführungsform, in der durch den Anwender getätigte Stroke-Eingaben entgegengenommen und durch den Objekterkennungsprozeß verarbeitet wurden. Das Ergebnis der Objekterkennung ist durch Bereich **1505** (diagonale Schrägschraffur) dargestellt. Der Bereich **1505** liegt innerhalb des kumulierten Wirkbereichs **1410** und korrespondiert mit den Pixeln in Puffer M **335.** Der Bereich **1505** umfasst auch den Löschbereich **1510,** dessen Löschung in Fig. **16** und Fig. **17** beschrieben wird.

Fig. **16** demonstriert als Illustration eine Benutzeroberfläche einer möglichen Ausführungsform, in der eine durch den Anwender getätigte Stroke-Eingabe nahe dem Löschbereich **1510** erfolgte, da der Löschbereich **1510** über die tatsächlichen Objektkanten hinausragt und zur Korrektur entfernt werden soll. Die Zeile **1605** zeigt den Pfad aus den Koordinaten des Strokes, die der Anwender getätigt hat. Der Bereich **1610** illustriert den kumulierten Wirkbereich des in Fig. **16** angewendete Löschwerkzeugs. Der Bereich **1615** illustriert den Wirkbereich des in Fig. **16** verwendeten Löschwerkzeugs zum Zeitpunkt der Beendigung des getätigten Strokes.

Fig. **17** demonstriert als Illustration eine Benutzeroberfläche einer möglichen Ausführungsform, in der das Ergebnis aus Fig. **16** dargestellt wird. Der Bereich **1705** (in diagonaler Schrägschraffur dargestellt) illustriert das überarbeitete Objekt, bei dem ein im Bereich **1610** identifiziertes Objekt **1510** vom Bereich **1505** entfernt wurde. Nun kann ein Effekt oder Filter selektiv auf das erkannte Objekt im Bereich **1705** angewendet werden.

**Patentansprüche**

1.  Computer-implementiertes Verfahren zur Erkennung eines mittels Stroke-Eingabe eines Anwenders markierten Objekts anhand von Pixeln in einem digitalen Bild, das folgende Verfahrensschritte aufweist:

    - Erhalten eines digitalen Bildes, im Speicher eines Computers;
    - Darstellen des digitalen Bildes auf einem Display des Computers;
    - Empfangen von Stroke-Eingaben eines Anwenders über eine Eingabeschnittstelle des Computers;
    - Bestimmen der Pixel im digitalen Bild, die mit der Stroke-Eingabe des Anwenders korrespondieren und die als dem zu erkennenden Objekt zugehörig bestimmt werden,
    - Bestimmen der Pixel, die in einem wählbaren Perimeterbereich um die Pixel herum liegen, die mit der Stroke-Eingabe des Anwenders korrespondieren,
    - Ausführung der Objekterkennung unter Verwendung der Pixel, die mit der Stroke-Eingabe des Anwenders korrespondieren und der Pixel in dem Perimeterbereich, wozu

    für jedes Pixel innerhalb des Perimeterbereichs bestimmt wird, ob es hinsichtlich einer gewählten Metrik näher am Außenrand des Perimeterbereiches oder näher an den Pixeln liegt, die mit der Stroke-Eingabe des Anwenders korrespondieren, wobei zur Bestimmung dessen, ob ein Pixel aus dem Perimeterbereich hinsichtlich einer gewählten Metrik näher am Außenrand des Perimeterbereiches oder näher an den Pixeln liegt, die mit der Stroke-Eingabe des Anwenders korrespondieren, ein Algorithmus zur Bestimmung der kürzesten Wege hinsichtlich der gewählten Metrik in einem kantengewichteten Graphen Verwendung findet, wobei die Pixel im Perimeterbereich einschließlich der Pixel am Außenrand des Perimeterbereiches und die Pixel, die mit der Stroke-Eingabe des Anwenders korrespondieren, die Knoten des Graphen bilden und die Gewichte der die - jeweils benachbarten Pixeln entsprechenden - Knoten verbindenden Kanten des Graphen einen Abstand zwischen den entsprechenden Pixeln hinsichtlich der gewählten Metrik repräsentieren, und wobei

sowohl der Abstand hinsichtlich der gewählten Metrik zwischen jeweils zwei beliebigen Pixeln, die mit der Stroke-Eingabe des Anwenders korrespondieren wie auch der Abstand zwischen jeweils zwei beliebigen Pixeln am Außenrand des Perimeterbereiches hinsichtlich der gewählten Metrik zu Null gesetzt wird, wobei

ein Pixel innerhalb des Perimeterbereiches als dem zu erkennenden Objekt zugehörig bestimmt wird, wenn es hinsichtlich der gewählten Metrik näher an den Pixeln liegt, die mit der Stroke-Eingabe des Anwenders korrespondieren

oder aber

ein Pixel innerhalb des Perimeterbereiches nicht als zu dem zu erkennenden Objekt zugehörig bestimmt wird, wenn es hinsichtlich der gewählten Metrik näher am Außenrand des Perimeterberiches liegt

und so alle Pixel des mittels Stroke-Eingabe des Anwenders markierten Objekts erkannt werden.

2. Computer-implementiertes Verfahren zur Erkennung eines mittels Stroke-Eingabe eines Anwenders markierten Objekts anhand von Pixeln in einem digitalen Bild nach Anspruch 1, **dadurch gekennzeichnet, daß** als Algorithmus zur Bestimmung der kürzesten Wege hinsichtlich der gewählten Metrik in dem Graphen der Algorithmus von Dijkstra Verwendung findet.

3. Computer-implementiertes Verfahren zur Erkennung eines mittels Stroke-Eingabe eines Anwenders markierten Objekts anhand von Pixeln in einem digitalen Bild nach Anspruch 2, **dadurch gekennzeichnet, daß** bei der Verwendung des Algorithmus von Dijkstra zur Bestimmung der kürzesten Wege eine Bestimmung der Länge des kürzesten Weges zwischen einem Pixel, der mit der Stroke-Eingabe des Anwenders korrespondiert, oder einem Pixel am Außenrand des Perimeterbereichs als Startknoten und allen Knoten des Perimeterbereichs erfolgt.

4. Computer-implementiertes Verfahren zur Erkennung eines mittels Stroke-Eingabe eines Anwenders markierten Objekts anhand von Pixeln in einem digitalen Bild nach Anspruch 2 oder 3, **dadurch gekennzeichnet, daß** während der Ausführung des Dijkstra-Algorithmus als nächst zu wählender Knoten, der auf dem jeweilig zu findenden kürzesten Weg liegt, der Knoten gewählt wird, dessen Abstandssumme hinsichtlich der gewählten Metrik auf dem zu diesem Knoten zugehörigen und bis dahin gefundenen kürzesten Weg über alle zwischenliegenden Knoten im Graphen hin zu diesem Knoten vom gewählten Startpunkt aus die kleinste ist.

5. Computer-implementiertes Verfahren zur Erkennung eines mittels Stroke-Eingabe eines Anwenders markierten Objekts anhand von Pixeln in einem digitalen Bild nach Anspruch 4, **dadurch gekennzeichnet, daß** der als nächster auf dem jeweilig zu findenden kürzesten Weg gewählte Knoten vermittels eines hierzu verwendeten Fibonacci-Heaps bestimmt wird, dessen Schlüssel die Abstandssumme hinsichtlich der gewählten Metrik, der auf dem jeweiligen Knoten zugehörigen kürzesten Weg über alle zwischenliegenden Knoten im Graphen hin zu diesem Knoten vom gewählten Startpunkt aus ist.

6. Computer-implementiertes Verfahren zur Erkennung eines mittels Stroke-Eingabe eines Anwenders markierten Objekts anhand von Pixeln in einem digitalen Bild nach Anspruch 5, **dadurch gekennzeichnet, daß** Pixel, die entweder mit der Stroke-Eingabe des Anwenders korrespondieren oder am Außenrand des Perimeterbereichs liegen während der Ausführung des Dijkstra-Algorithmus auch wechselnd als jeweiliger Startknoten fungieren können und bei der Bestimmung des jeweiligen zu einem Knoten führenden kürzesten Weges festgehalten wird, ob dieser jeweilige kürzeste Weg von einem Pixel als Startknoten stammt, das mit der Stroke-Eingabe des Anwenders korrespondiert oder aber von einem Pixel als Startknoten stammt, das auf dem Außenrand des Perimeterbereichs liegt.

7. Computer-implementiertes Verfahren zur Erkennung eines mittels Stroke-Eingabe eines Anwenders markierten Objekts anhand von Pixeln in einem digitalen Bild nach einem der Ansprüche 1 bis 6, **dadurch gekennzeichnet, daß** als Metrik für den Abstand zweier Pixel im digitalen Bild die euklidische Distanz zwischen zwei Punkten im dreidimensionalen Raum $R^3$ gewählt wird, die sich daraus ergibt, daß als Koordinaten der beiden Punkte in dem dreidimensionalen Raum $R^3$ die jeweiligen drei Grundfarbenkomponentenanteile - vorzugsweise rot, grün und blau - des jeweiligen Pixel verwendet werden.

8. Computer-implementiertes Verfahren zur Erkennung eines mittels Stroke-Eingabe eines Anwenders markierten Objekts anhand von Pixeln in einem digitalen Bild nach einem der Ansprüche 1 bis 7, **dadurch gekennzeichnet, daß** das Verfahren auch das Empfangen von Eingaben eines Anwenders zum Verändern eines gerade verwendeten Abbildungsmaßstabs in der Darstellung auf dem Display des Computers aufweist, die eine der Eingabe des Anwenders entsprechende Veränderung des gerade verwendeten Abbildungsmaßstabs bewirken, wobei der gewählte Abbildungsmaßstab auch die Pixelauflösung des digitalen Bildes das zur Ausführung der Objekterkennung im Speicher des Computers erhalten wird bestimmt.

9. Computer-implementiertes Verfahren zur Erkennung eines mittels Stroke-Eingabe eines Anwenders markierten Objekts anhand von Pixeln in einem digitalen Bild nach einem der Ansprüche 1 bis 8, **dadurch gekennzeichnet, daß** auf den Umriß des erkannten Objekts ein gaußscher Weichzeichner angewendet wird..

10. Computer-implementiertes Verfahren zur Erkennung eines mittels Stroke-Eingabe eines Anwenders markierten Objekts anhand von Pixeln in einem digitalen Bild nach Anspruch 9, **dadurch gekennzeichnet, daß** zusätzlich zur Anwendung des Weichzeichners auf den Umriß des erkannten Objekts auch eine Rampen-Schwellenwertfunktion angewendet wird.

11. Computer-implementiertes Verfahren zur Erkennung eines mittels Stroke-Eingabe eines Anwenders markierten Objekts anhand von Pixeln in einem digitalen Bild nach einem der Ansprüche 1 bis 10, **dadurch gekennzeichnet, daß** das Empfangen eines Strokes und die Ausführung der Objekterkennung nacheinander ausgeführt werden.

12. Computer-implementiertes Verfahren zur Erkennung eines mittels Stroke-Eingabe eines Anwenders markierten Objekts anhand von Pixeln in einem digitalen Bild nach einem der Ansprüche 1 bis 10, **dadurch gekennzeichnet, daß** das Empfangen eines Strokes und die Ausführung der Objekterkennung parallel zueinander ausgeführt werden.

13. Computer-implementiertes Verfahren zur Erkennung eines mittels Stroke-Eingabe eines Anwenders markierten Objekts anhand von Pixeln in einem digitalen Bild nach einem der Ansprüche 1 bis 12, **dadurch gekennzeichnet, daß** das Empfangen von Strokes hauptsächlich von einer GPU des Computers ausgeführt wird.

14. Computer-implementiertes Verfahren zur Erkennung eines mittels Stroke-Eingabe eines Anwenders markierten Objekts anhand von Pixeln in einem digitalen Bild nach einem der Ansprüche 1 bis 13, **dadurch gekennzeichnet, daß** die Ausführung der Objekterkennung hauptsächlich von der CPU des Computers ausgeführt wird.

15. Computersystem zur Erkennung eines mittels Stroke-Eingabe eines Anwenders markierten Objekts anhand von Pixeln in einem digitalen Bild, wobei das Computersystem zumindest einen Computer und zumindest einen Prozessor und mindestens einen Speicher sowie zumindest eine Eingabeschnittstelle zum Empfang von Stroke-Eingaben eines Anwenders aufweist, **dadurch gekennzeichnet, daß** das Computersystem vermittels eines Computerprogramms zur Durchführung des Verfahrens nach einem der Ansprüche 1 bis 14 eingerichtet ist.

16. Computersystem zur Erkennung eines mittels Stroke-Eingabe eines Anwenders markierten Objekts anhand von Pixeln in einem digitalen Bild nach Anspruch 15, **dadurch gekennzeichnet, daß** als Eingabeschnittstelle des Computers zum Empfang von Stroke-Eingaben eines Anwenders ein berührungsempfindliches Display vorgesehen ist.

17. Computersystem zur Erkennung eines mittels Stroke-Eingabe eines Anwenders markierten Objekts anhand von Pixeln in einem digitalen Bild nach Anspruch 15 oder 16, **dadurch gekennzeichnet, daß** als Eingabeschnittstelle des Computers zum Empfang von Stroke-Eingaben eines Anwenders eine Maus vorgesehen ist.

18. Computerprogramm, das Instruktionen aufweist, die zur Durchführung des Verfahrens nach einem der Ansprüche 1 bis 14 eingerichtet sind.

19. Computerprogrammprodukt, welches ein computerlesbares Medium mit Computerprogramm-Code-Mitteln aufweist, bei dem jeweils nach Laden des Computerprogramms in einen Computer der Computer durch das Programm zur Durchführung des Verfahrens nach einem der Ansprüche 1 bis 14 eingerichtet ist.

20. Computerprogrammprodukt, welches ein Computerprogramm auf einem elektronischen Signal aufweist, bei dem jeweils nach Laden des Computerprogramms in einen Computer der Computer zur Durchführung des Verfahrens nach einem der Ansprüche 1 bis 14 eingerichtet ist.

**Claims**

1. Computer-implemented method for recognizing an object marked by means of a stroke input of a user on the basis of pixels in a digital image comprising the following method steps:

- obtaining a digital image, in the memory of a computer;
- representing the digital image on a display of the computer;
- receiving stroke inputs of a user via an input interface of the computer;
- determining the pixels in the digital image which correspond to the stroke input of the user and which are determined as being associated with the object to be recognized,
- determining the pixels which lie in a selectable perimeter region around the pixels which correspond to the stroke input of the user,
- performing the object recognition using the pixels which correspond to the stroke input of the user and the pixels in the perimeter region, for which purpose

for each pixel within the perimeter region it is determined whether, with regard to a selected metric, it lies closer to the outer edge of the perimeter region or closer to the pixels which correspond to the stroke input of the user, wherein

for determining whether a pixel from the perimeter region, with regard to a selected metric, lies closer to the outer edge of the perimeter region or closer to the pixels which correspond to the stroke input of the user, use is made of an algorithm for determining the shortest paths with regard to the selected metric in an edge-weighted graph, wherein the pixels in the perimeter region including the pixels at the outer edge of the perimeter region and the pixels which correspond to the stroke input of the user form the nodes of the graph and the weights of the edges of the graph that connect the nodes - corresponding to respectively adjacent pixels - represent a distance between the corresponding pixels with regard to the selected metric, and wherein

both the distance with regard to the selected metric between in each case two arbitrary pixels which correspond to the stroke input of the user and the distance between in each case two arbitrary pixels at the outer edge of the perimeter region with regard to the selected metric are set to zero, wherein

a pixel within the perimeter region is determined as being associated with the object to be recognized, if, with regard to the selected metric, it lies closer to the pixels which correspond to the stroke input of the user

or else

a pixel within the perimeter region is not determined as being associated with the object to be recognized if, with regard to the selected metric, it lies closer to the outer edge of the perimeter region,

and all pixels of the object marked by means of a stroke input of the user are thus recognized.

2. Computer-implemented method for recognizing an object marked by means of a stroke input of a user on the basis of pixels in a digital image according to Claim 1, **characterized in that** Dijkstra's algorithm is used as the algorithm for determining the shortest paths with regard to the selected metric in the graph.

3. Computer-implemented method for recognizing an object marked by means of a stroke input of a user on the basis of pixels in a digital image according to Claim 2, **characterized in that** a determination of the length of the shortest path between a pixel which corresponds to the stroke input of the user or a pixel at the outer edge of the perimeter region as start node and all nodes of the perimeter region is effected in the use of Dikjkstra's algorithm for determining the shortest paths.

4. Computer-implemented method for recognizing an object marked by means of a stroke input of a user on the basis of pixels in a digital image according to Claim 2 or 3, **characterized in that** during the execution of Dijkstra's algorithm as the node which is to be selected next and which lies on the shortest path respectively to be found that node is selected whose distance sum with regard to the selected metric on the shortest path associated with this node and found up until then over all intervening nodes in the graph through to this node from the selected starting point is the smallest.

5. Computer-implemented method for recognizing an object marked by means of a stroke input of a user on the basis of pixels in a digital image according to Claim 4, **characterized in that** the node selected next on the shortest path respectively to be found is determined by means of a Fibonacci Heap which is used for this purpose and whose key is the distance sum with regard to the selected metric, which is on the shortest path associated with the respective node over all intervening nodes in the graph through to this node from the selected starting point.

6. Computer-implemented method for recognizing an object marked by means of a stroke input of a user on the basis of pixels in a digital image according to Claim 5, **characterized in that** pixels which either correspond to the stroke input of the user or lie at the outer edge of the perimeter region, during the execution of Dijkstra's algorithm, can also alternately function as a respective start node and, in determining the respective shortest path leading to a node, it is registered whether said respective shortest path originates from a pixel as start node which corresponds to the stroke input of the user or else originates from a pixel as start node which lies on the outer edge of the perimeter region.

7. Computer-implemented method for recognizing an object marked by means of a stroke input of a user on the basis of pixels in a digital image according to any of Claims 1 to 6, **characterized in that** as a metric for the distance between two pixels in the digital image the Euclidean distance between two points in three-dimensional space $R^3$ is selected, which results from the fact that the respective three primary colour component portions - preferably red, green and blue - of the respective pixel are used as coordinates of the two points in three-dimensional space $R^3$.

8. Computer-implemented method for recognizing an object marked by means of a stroke input of a user on the basis of pixels in a digital image according to any of Claims 1 to 7, **characterized in that** the method also comprises receiving inputs of a user for altering a currently used imaging scale in the representation on the display of the computer, which inputs bring about an alteration of the currently used imaging scale which corresponds to the user's input, wherein the selected imaging scale also determines the pixel resolution of the digital image obtained for performing the object recognition in the memory of the computer.

9. Computer-implemented method for recognizing an object marked by means of a stroke input of a user on the basis of pixels in a digital image according to any of Claims 1 to 8, **characterized in that** a Gaussian blur is applied to the contour of the recognized object.

10. Computer-implemented method for recognizing an object marked by means of a stroke input of a user on the basis of pixels in a digital image according to Claim 9, **characterized in that** a ramp threshold function is also applied in addition to the application of the blur to the contour of the recognized object.

11. Computer-implemented method for recognizing an object marked by means of a stroke input of a user on the basis of pixels in a digital image according to any of Claims 1 to 10, **characterized in that** receiving a stroke and performing the object recognition are performed successively.

12. Computer-implemented method for recognizing an object marked by means of a stroke input of a user on the basis of pixels in a digital image according to any of Claims 1 to 10, **characterized in that** receiving a stroke and performing the object recognition are performed in parallel with one another.

13. Computer-implemented method for recognizing an object marked by means of a stroke input of a user on the basis of pixels in a digital image according to any of Claims 1 to 12, **characterized in that** receiving strokes is performed principally by a GPU of the computer.

14. Computer-implemented method for recognizing an object marked by means of a stroke input of a user on the basis of pixels in a digital image according to any of Claims 1 to 13, **characterized in that** performing the object recognition is performed principally by the CPU of the computer.

15. Computer system for recognizing an object marked by means of a stroke input of a user on the basis of pixels in a digital image, wherein the computer system comprises at least one computer and at least one processor and at least one memory and also at least one input interface for receiving stroke inputs of a user, **characterized in that** the computer system is configured by means of a computer program for carrying out the method according to any of Claims 1 to 14.

16. Computer system for recognizing an object marked by means of a stroke input of a user on the basis of pixels in a digital image according to Claim 15, **characterized in that** a touch-sensitive display is provided as the input interface of the computer for receiving stroke inputs of a user.

17. Computer system for recognizing an object marked by means of a stroke input of a user on the basis of pixels in a digital image according to Claim 15 or 16, **characterized in that** a mouse is provided as the input interface of the computer for receiving stroke inputs of a user.

18. Computer program having instructions configured for carrying out the method according to any of Claims 1 to 14.

19. Computer program product comprising a computer-readable medium having computer program code means, wherein, in each case after the loading of the computer program into a computer, the computer is configured by the program for carrying out the method according to any of Claims 1 to 14.

20. Computer program product comprising a computer program on an electronic signal, wherein, in each case after the loading of the computer program into a computer, the computer is configured for carrying out the method according to any of Claims 1 to 14.

## Revendications

1. Procédé mis en oeuvre sur ordinateur pour reconnaître un objet marqué au moyen d'une entrée de frappe d'un utilisateur sur la base de pixels dans une image numérique, comprenant les étapes de procédé suivantes :

   - obtenir une image numérique dans la mémoire d'un ordinateur ;
   - représenter l'image numérique sur un afficheur de l'ordinateur ;
   - recevoir des entrées de frappe d'un utilisateur par l'intermédiaire d'une interface d'entrée de l'ordinateur ;
   - déterminer, dans l'image numérique, les pixels qui correspondent aux entrées de frappe de l'utilisateur et qui sont déterminés comme appartenant à l'objet à identifier ;
   - déterminer les pixels qui, dans un domaine périmétrique pouvant être sélectionné entourant le pixel, correspondent à l'entrée de frappe de l'utilisateur,
   - exécuter la reconnaissance d'objet en utilisant les pixels qui correspondent à l'entrée de frappe de l'utilisateur et les pixels se trouvant dans le domaine périmétrique,

   en déterminant, pour chaque pixel se trouvant à l'intérieur du domaine périmétrique, s'il est plus proche, conformément à une métrique sélectionnée, d'un bord extérieur du domaine périmétrique, ou s'il est plus proche des pixels qui correspondent l'entrée de frappe de l'utilisateur, dans lequel
   pour déterminer si un pixel provenant du domaine périmétrique est plus proche, conformément à une métrique sélectionnée, du bord extérieur du domaine périmétrique ou s'il est plus proche des pixels qui correspondent à l'entrée de frappe de l'utilisateur, on utilise un algorithme destiné à déterminer le chemin le plus court, conformément à la métrique sélectionnée, dans un graphe pondéré par les bords, dans lequel les pixels se trouvant dans le domaine périmétrique, y compris les pixels situés sur le bord extérieur du domaine périmétrique et les pixels qui correspondent à l'entrée de frappe de l'utilisateur, qui forment des noeuds du graphe et les poids des côtés du graphe qui relient les noeuds - correspondant respectivement à des pixels voisins - représentent une distance entre les pixels correspondants conformément à la métrique sélectionnée, et dans lequel
   la distance, conformément à la métrique sélectionnée, entre deux pixels quelconques respectifs correspondant à l'entrée de frappe de l'utilisateur, ainsi que la distance entre deux pixels quelconques respectifs sur le bord extérieur du domaine périmétrique, conformément à la métrique sélectionnée, est mise à zéro, dans lequel
   un pixel situé à l'intérieur du domaine périmétrique est déterminé comme appartenant à l'objet à reconnaître lorsqu'il est plus proche, conformément à la métrique sélectionnée, des pixels qui correspondent à l'entrée de frappe de l'utilisateur,
   ou
   un pixel situé à l'intérieur du domaine périmétrique n'est pas déterminé comme appartenant à l'objet à reconnaître lorsqu'il est plus proche, conformément à la métrique sélectionnée, du bord extérieur du domaine périmétrique,
   de sorte que tous les pixels de l'objet marqué au moyen de l'entrée de frappe de l'utilisateur sont reconnus.

2. Procédé mis en oeuvre sur ordinateur pour reconnaître un objet marqué au moyen d'une entrée de frappe d'un utilisateur sur la base de pixels contenus dans une image numérique selon la revendication 1, **caractérisé en ce qu'**on utilise en tant qu'algorithme pour déterminer le chemin le plus court dans le graphe, conformément à la métrique sélectionnée, l'algorithme de Dijkstra.

3. Procédé mis en oeuvre sur ordinateur pour reconnaître un objet marqué au moyen d'une entrée de frappe d'un utilisateur sur la base de pixels contenus dans une image numérique selon la revendication 2, **caractérisé en ce que**, lors de l'utilisation de l'algorithme de Dijkstra pour déterminer le chemin le plus court, on effectue une détermination de la longueur du chemin le plus court entre un pixel qui correspond à l'entrée de frappe de l'utilisateur ou un pixel situé sur le bord extérieur du domaine périmétrique, en tant que noeud de départ et que la totalité des noeuds du domaine périphérique.

4. Procédé mis en oeuvre sur ordinateur pour reconnaître un objet marqué au moyen d'une entrée de frappe d'un utilisateur sur la base de pixels contenus dans une image numérique selon la revendication 2 ou 3, **caractérisé en ce que**, pendant l'exécution de l'algorithme de Dijkstra, on sélectionne en tant que noeud à sélectionner ensuite, qui se trouve sur le chemin le plus court respectif à trouver, le noeud dont la somme des distances, conformément à la métrique sélectionnée, est plus petite sur le chemin le plus court auquel appartient ledit noeud, ayant été trouvé jusqu'alors, et passant par tous les noeuds intermédiaires du graphe du point de départ sélectionné jusqu'audit noeud.

5. Procédé mis en oeuvre sur ordinateur pour reconnaître un objet marqué au moyen d'une entrée de frappe d'un utilisateur sur la base de pixels contenus dans une image numérique selon la revendication 4, **caractérisé en ce que** le noeud sélectionné comme étant le plus proche sur le chemin le plus court respectif à trouver est déterminé au moyen d'un tas de Fibonacci dont la clé est la somme des distances, conformément à la métrique sélectionnée, du chemin le plus court auquel appartient le noeud respectif sur tous les noeuds intermédiaires dans le graphe, du point de départ sélectionné audit noeud.

6. Procédé mis en oeuvre sur ordinateur pour reconnaître un objet marqué au moyen d'une entrée de frappe d'un utilisateur sur la base de pixels contenus dans une image numérique selon la revendication 5, **caractérisé en ce que** des pixels, qui correspondent à l'entrée de frappe de l'utilisateur, ou qui se situent sur le bord extérieur du domaine périmétrique pendant l'exécution de l'algorithme de Dijkstra, peuvent également alternativement jouer le rôle de noeuds de départ respectifs et **en ce que**, lors de la détermination du chemin le plus court respectif conduisant à un noeud, il est déterminé si ledit chemin le plus court respectif part d'un pixel, en tant que noeud de départ, qui correspond à l'entrée de frappe de l'utilisateur, ou part d'un pixel, en tant que noeud de départ, qui se situe sur le bord extérieur du domaine périmétrique.

7. Procédé mis en oeuvre sur ordinateur pour reconnaître un objet marqué au moyen d'une entrée de frappe d'un utilisateur sur la base de pixels contenus dans une image numérique selon l'une quelconque des revendications 1 à 6, **caractérisé en ce que** l'on sélectionne en tant que métrique pour la distance entre deux pixels de l'image numérique, la distance euclidienne entre deux points se trouvant dans l'espace tridimensionnel $R^3$, qui est obtenue en utilisant en tant que coordonnées des deux points dans l'espace tridimensionnel $R^3$, les trois composantes de couleurs fondamentales - de préférence, rouge, vert et bleu - du pixel respectif.

8. Procédé mis en oeuvre sur ordinateur pour reconnaître un objet marqué au moyen d'une entrée de frappe d'un utilisateur sur la base de pixels contenus dans une image numérique selon l'une quelconque des revendications 1 à 7, **caractérisé en ce que** le procédé consiste également à recevoir des entrées d'un utilisateur destinées à modifier une échelle de représentation utilisée dans la représentation effectuée sur l'afficheur de l'ordinateur, lesquelles modifications conduisent à une modification, correspondant à l'entrée de l'utilisateur, de l'échelle de représentation en cours d'utilisation, dans lequel l'échelle de représentation sélectionnée détermine également la résolution en pixels de l'image numérique qui est obtenue pour exécuter la reconnaissance d'objet dans la mémoire de l'ordinateur.

9. Procédé mis en oeuvre sur ordinateur pour reconnaître un objet marqué au moyen d'une entrée de frappe d'un utilisateur sur la base de pixels contenus dans une image numérique selon l'une quelconque des revendications 1 à 8, **caractérisé en ce qu'**un flou Gaussien est appliqué au contour de l'objet reconnu.

10. Procédé mis en oeuvre sur ordinateur pour reconnaître un objet marqué au moyen d'une entrée de frappe d'un utilisateur sur la base de pixels contenus dans une image numérique selon la revendication 9, **caractérisé en ce que**, pour appliquer le flou Gaussien au contour de l'objet reconnu, une fonction de seuil à rampe est également appliquée.

11. Procédé mis en oeuvre sur ordinateur pour reconnaître un objet marqué au moyen d'une entrée de frappe d'un utilisateur sur la base de pixels contenus dans une image numérique selon l'une quelconque des revendications 1 à 10, **caractérisé en ce que** la réception d'une frappe et l'exécution de la reconnaissance d'objets sont effectuées consécutivement.

12. Procédé mis en oeuvre sur ordinateur pour reconnaître un objet marqué au moyen d'une entrée de frappe d'un utilisateur sur la base de pixels contenus dans une image numérique selon l'une quelconque des revendications 1 à 10, **caractérisé en ce que** la réception d'une frappe et l'exécution de la reconnaissance d'objet sont réalisées en parallèle l'une à l'autre.

13. Procédé mis en oeuvre sur ordinateur pour reconnaître un objet marqué au moyen d'une entrée de frappe d'un utilisateur sur la base de pixels contenus dans une image numérique selon l'une quelconque des revendications 1 à 12, **caractérisé en ce que** la réception des frappes est principalement réalisée par une GPU de l'ordinateur.

14. Procédé mis en oeuvre sur ordinateur pour reconnaître un objet marqué au moyen d'une entrée de frappe d'un utilisateur sur la base de pixels contenus dans une image numérique selon l'une quelconque des revendications 1 à 13, **caractérisé en ce que** l'exécution de la reconnaissance d'objets est principalement réalisée par la CPU de l'ordinateur.

15. Système d'ordinateur destiné à reconnaître un objet marqué au moyen d'une entrée de frappe d'un utilisateur sur la base de pixels contenus dans une image numérique, dans lequel le système d'ordinateur comporte au moins un ordinateur et au moins un processeur et au moins une mémoire ainsi qu'au moins une interface d'entrée destinée à recevoir des entrées de frappe d'un utilisateur, **caractérisé en ce que** le système d'ordinateur est conçu pour mettre en oeuvre le procédé selon l'une quelconque des revendications 1 à 14 au moyen d'un programme d'ordinateur.

16. Système d'ordinateur pour reconnaître un objet marqué au moyen d'une entrée de frappe d'un utilisateur sur la base de pixels contenus dans une image numérique selon la revendication 15, **caractérisé en ce qu'**un afficheur tactile est prévu en tant qu'interface d'entrée de l'ordinateur pour recevoir des entrées de frappe d'un utilisateur.

17. Système d'ordinateur pour reconnaître un objet marqué au moyen d'une entrée de frappe d'un utilisateur sur la base de pixels contenus dans une image numérique selon la revendication 15 ou 16, **caractérisé en ce qu'**il est prévu une souris en tant qu'interface d'entrée de l'ordinateur pour recevoir des entrées de frappe d'un utilisateur.

18. Programme d'ordinateur comprenant des instructions qui sont conçues pour mettre en oeuvre le procédé selon l'une quelconque des revendications 1 à 14.

19. Produit de programme d'ordinateur qui comprend un support lisible par ordinateur ayant des moyens à code de programme d'ordinateur, dans lequel, après le chargement du programme d'ordinateur dans un ordinateur, l'ordinateur est conçu pour mettre en oeuvre le procédé selon l'une quelconque des revendications 1 à 14 par l'intermédiaire dudit programme.

20. Produit de programme gramme d'ordinateur qui comprend un programme d'ordinateur sur un signal électronique, dans lequel, après chargement respectif du programme d'ordinateur dans un ordinateur, l'ordinateur est conçu pour mettre en oeuvre le procédé selon l'une quelconque des revendications 1 à 14.

# FIG. 1

FIG. 2

200

NETZWERKSCHNITTSTELLE

230

PROZESSOREINHEIT

| 212 CPU | 214 GPU |

210

DISPLAY

240

ANWENDEREINGABE

245

COMPUTER-
LESBARES
SPEICHERMEDIUM

295

220

ENDGERÄTESPEICHER

BETRIEBSSYSTEM

255

STROKE-EINGABEPROZESS

500

OBJEKTERKENNUNGSPROZESS

600

FILTER-/EFFEKT-PROZESS

260

ENDGERÄTEDATENSPEICHER

300

250

## FIG. 3

300

**ENDGERÄTEDATENSPEICHER**

305 — PUFFER I

310 — PUFFER W

315 — PUFFER P

320 — PUFFER B

325 — PUFFER D

330 — PUFFER R

335 — PUFFER M

340 — PUFFER B

345 — FILTER UND EFFEKTE

350 — PUFFER C

FIG. 4

400

FOTO ERHALTEN: PUFFER I — 405

ANWENDER-STROKES ERHALTEN
UND VERARBEITEN — 500

OBJEKTERKENNUNG AUSFÜHREN;
IN PUFFER M SICHERN — 600

FILTER/EFFEKT-AUSWAHL ERHALTEN — 410

FILTER/EFFEKT ANWENDEN — 415

AUSGABE — 420

FERTIG — 499

# Fig. 5

500

```
┌─────────────────────────────────┐
│   STROKE-WERKZEUG AKTIVIERT      │ 505
└─────────────────────────────────┘
                │
                ▼
┌─────────────────────────────────┐
│ OPTIONAL: OBJEKTERKENNUNG AN/AUS │ 510
└─────────────────────────────────┘
                │
                ▼
┌─────────────────────────────────┐
│  ANWENDER VERSCHIEBT SICHTBEREICH│ 515
└─────────────────────────────────┘
                │
                ▼
┌─────────────────────────────────┐
│ ANWENDER SETZT ABBILDUNGSMASSSTAB│ 520
└─────────────────────────────────┘
                │
                ▼
┌─────────────────────────────────┐
│    ANWENDER FÜHRT STROKE AUS     │ 525
└─────────────────────────────────┘
                │
                ▼
┌─────────────────────────────────┐
│   WIRKBEREICH VON PINSEL BZW.    │
│ LÖSCHWERKZEUG ALS PUFFER P SICHERN│ 530
└─────────────────────────────────┘
                │
                ▼
┌─────────────────────────────────┐
│ ZENTRUM DES WIRKBEREICHS ERKENNEN│ 540
└─────────────────────────────────┘
                │
                ▼
┌─────────────────────────────────┐
│     ZENTRUM VON PINSEL BZW:      │
│ LÖSCHWERKZEUG IN PUFFER B SICHERN│
│       („INNERE PIXEL")           │ 545
└─────────────────────────────────┘
                │
                ▼
┌─────────────────────────────────┐
│    STROKE AUF DISPLAY RENDERN    │ 550
└─────────────────────────────────┘
                │
                ▼
┌─────────────────────────────────┐
│   WENN ANWENDER NEUEN STROKE     │
│ BEGINNT, BEI 525 FORTFAHREN, SONST│ 555
└─────────────────────────────────┘
                │
                ▼
┌─────────────────────────────────┐
│      ANWENDER HEBT FINGER        │ 560
└─────────────────────────────────┘
                │
                ▼
┌─────────────────────────────────┐
│  KLEINSTES STROKE UMFASSENDES    │
│  RECHTECK ALS PUFFER W SICHERN   │ 565
└─────────────────────────────────┘
                │
                ▼
┌─────────────────────────────────┐
│    PERIMETER VON PINSEL BZW.     │
│ LÖSCHWERKZEUG ALS PUFFER D SICHERN│
│       („ÄUSSERE PIXEL")          │ 570
└─────────────────────────────────┘
                │
                ▼
┌─────────────────────────────────┐
│            RETURN                │ 599
└─────────────────────────────────┘
```

FIG. 6

600

BEI STROKE-ENDE (IM ONLINE-MODUS:
WÄHREND STROKE)
605

OPTIONAL: WENN >1 PUFFER W, P, B MEHR ALS
Z PIXEL ENTHÄLT, DANN SKALIERE ALLE
PUFFER UM S <= 1 UM MAXIMAL Z PIXEL ZU
ENTHALTEN
610

DISTANZ-NETZWERK DURCH
WEGFINDUNG BERECHNEN UND IN
PUFFER R SICHERN
700

GAUSSSCHEN WEICHZEICHNER MIT VON
PUFFER W ABHÄNGIGER FILTERKERNGRÖSSE
AUF PUFFER R ANWENDEN
615

SCHWELLENWERTFUNKTION AUF PUFFER R
620

PUFFER R UM 1/S SKALIEREN
625

PUFFER R AKTUALISIEREN/SICHERN
630

PUFFER R IN PUFFER M MISCHEN
635

RETURN
699

## FIG. 7

PUFFER R MIT 0 INITIALISIEREN — 701

FÜR JEDES PIXEL P IN PUFFER W UND DEM STROKE-WIRKBEREICH — 705

WERT 1 IN PUFFER B ODER D? — 710

— NO → WERT AUF UNENDLICH SETZEN — 735

YES

DISTANZWERT 0 ZUWEISEN — 715

PUFFER B ODER D? — 720

BUFFER D → KORRESPONDIERENDES PIXEL IN PUFFER R AUF 0 SETZEN — 725

BUFFER B

KORRESPONDIERENDES PIXEL IN PUFFER R AUF 1 SETZEN — 730

DEM FIBONACCI-HEAP HINZUFÜG. — 740

FÜR JEDES PIXEL P IN PUFFER W UND DEM STROKE-WIRKBEREICH — 745

PIXEL P MIT MINIMALEM DISTANZWERT HOLEN — 750

NACHBARPIXEL Q ERMITTELN — 755

SUMME VON (DISTANZWERT VON P & P-Q DISTANZ) BERECHNEN — 760

WENN SUMME < DISTANZWERT(Q), SETZE DISTANZWERT(Q) AUF SUMME V. 760, SONST GEHE ZU 780 — 765

FIBONACCI-HEAP NEU SORT. — 770

PIXEL IN PUFFER R KORRESP. MIT Q AUF WERT VON PUFFER R KORRESP. MIT P SETZEN — 775

WENN HEAP NICHT LEER, GEHE ZU 750, ANSONSTEN — 780

RETURN — 799

FIG. 8

FIG. 9

900

905

900

1015

1005        1010

FIG. 10

FIG. 11

FIG. 12

1200

| FOTO ERHALTEN: PUFFER I | 1205 |

| PUFFER C ERZEUGEN | 1210 |

| ANWENDER ERZEUGT STROKES, WIRKBEREICH IN PUFFER C SICHERN | 1215 |

| UNTERSEQUENZEN VON STROKES ERHALTEN, SEQ.-LÄNGE DURCH CPU-LAST ERMITTELN | 1220 |

| WIRKBEREICH DER UNTERSEQUENZ AUS STROKES IN PUFFER C AUSBLENDEN | 1225 |

| DURCH DIE GPU PUFFER W, P, B UND D FÜR STROKE-UNTERSEQUENZ ERZEUGEN | 1230 |

| OBJEKTERKENNUNG MIT CPU AUSFÜHREN: PUFFER R ERZEUGEN / ZU PUFFER M HINZUFÜGEN | 1235 |

| VERBLEIBEN STROKES, GEHE ZU 1215 | 1240 |

| FERTIG | 1299 |

FIG. 13

FIG. 14

FIG. 15

FIG. 16

## FIG. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **DAN R. OLSEN et al.** Edge-respecting brushes. *Proc. 21st ACM symposium on User interface software and technology (UIST),* 19. Oktober 2008